(19) Europäisches Patentamt
European Patent Office
Office européen des brevets

(11) EP 1 847 574 A1

(12) **EUROPEAN PATENT APPLICATION**
published in accordance with Art. 158(3) EPC

(43) Date of publication:
**24.10.2007 Bulletin 2007/43**

(21) Application number: **05816690.1**

(22) Date of filing: **14.12.2005**

(51) Int Cl.:
***C09D 11/00*** *(2006.01)* ***B41J 2/01*** *(2006.01)*
***B41M 5/00*** *(2006.01)*

(86) International application number:
**PCT/JP2005/022980**

(87) International publication number:
**WO 2006/068018 (29.06.2006 Gazette 2006/26)**

(84) Designated Contracting States:
**DE FR GB**

(30) Priority: **24.12.2004 JP 2004374465**

(71) Applicant: **Sony Corporation**
**Minato-ku**
**Tokyo (JP)**

(72) Inventor: **SEKIGUCHI, Hideki**
**Tokyo (JP)**

(74) Representative: **Müller, Frithjof E. et al**
**Müller Hoffmann & Partner**
**Patentanwälte**
**Innere Wiener Strasse 17**
**81667 München (DE)**

# (54) LIQUID CARTRIDGE CONTAINING RECORDING LIQUID, LIQUID DELIVERY APPARATUS AND DELIVERY METHOD.

(57) Disclosed is a recording liquid for printing and recording the information on a support for printing, such as a recording paper sheet. This recording liquid contains dye, a solvent for dissolving or dispersing the dye, and a water-soluble organic solvent having a $Cobb_{30}$ value as measured by an ultrasonic transmitting dynamic liquid penetration measurement device as prescribed in JIS P8140:1998 of $22\pm2$ g/$m^2$, and having the time of peak occurrence in a penetration characteristic curve for a plain paper sheet of not less than 0.1 sec and not longer than 0.5 sec. As water-soluble organic solvent, one or more of 2-ethyl-2- propyl-1,3-propanediol, 2-methyl-2-butyl-1,3-propanediol, 2-methyl-2-propyl-1,3- propanediol, 2,2-diethyl-1,3-propanediol, 2-methyl-2- ethyl-1,3-propanediol and 2-propyl-1,4-butanediol, is used.

EP 1 847 574 A1

Printed by Jouve, 75001 PARIS (FR)

## Description

Technical Field

This invention relaters to a recording liquid for printing and recording the information on a support for recording, such as recording paper sheet, a liquid cartridge holding this recording liquid, and an apparatus and a method for emitting the recording liquid, held in the liquid cartridge, as a liquid droplet, via an emitting port onto a support for recording.
This application claims priority rights based on the JP Patent Application 2004-374465 filed in Japan on December 24, 2004. This Patent Application of senior filing data is incorporated in the present application by reference.

Background Art

Heretofore, a printer of the ink jet system, in which the ink as a recording liquid is emitted onto a recording paper sheet, as a recording support, for recording an image or a letter/ character thereon, has been used as a liquid emitting apparatus. This sort of the ink jet printer has been in use extensively, because the apparatus is low in running cost and lends itself to reduction in size and to printing of colored images.
Among different ink jet systems for emitting the ink, there are, for example, a deflection system, a cavity system, a thermo-jet system, a bubble jet (registered trademark) system, a thermal ink jet system, a slit jet system and a spark jet system. With these ink jet systems, the ink is emitted via an emitting port of an ink emitting head, or a so-called nozzle, so as to be deposited on a recording paper sheet for recording an image or a letter/ character thereon.
In a printer of the ink jet recording system, there are cases where printing is done not only on a paper sheet dedicated to ink jet recording, but also on a plane paper sheet, such as copy sheet or report pad, or a so-called high-quality paper sheet. It is therefore required of the ink, used for the ink jet printing system, to be high in image density, to be free from bleeding of images or letters/ characters, specifically, from boundary bleeding between different colors or all-over color mixing and speckling, and to suffer only negligible print-through. This will assure high quality image printing, in case printing is done on a plane paper sheet, to say nothing of a paper sheet dedicated to ink jet recording. To meet this demand, the inks as shown below have so far been proposed for use in the ink jet recording system.
One such ink, shown in the JP Patent Publication H60-23793 (Publication 1) improves the drying performance through use of dialkyl sulfosuccinic acid as surfactant. The ink stated in Publication 1 is narrow in the pH range for which expectation may be made of improving the drying performance. In addition, the printing density as well as the effect in improving the drying performance with lapse of time tends to be lowered.
On the other hand, an ink proposed in the JP Laid-Open Patent Publication S56-57862 (Publication 2) suppresses the image bleeding by adding a strongly basic material. The ink stated in this Publication 2 is valid only in case of using an acidic paper sheet, while being hardly effective for an ordinary neutral paper sheet.
The JP Laid-Open Patent Publication H-6-157959 (Publication 3) and the JP Laid-Open Patent Publication 2003-3100 (Publication 4) show an ink containing preset amounts of a wetting agent, a surfactant and 2-ethyl-1,3-hexanediol to improve image bleeding, in particular in overlaid color zones. Even though the ink shown in the Publications 3 and 4 improves image bleeding, it suffers severe print-through and low image density, such that it is difficult to obtain an optimum high-quality image.
The JP Laid-Open Patent Publication 2003-253167 (Publication 5) shows an ink containing 2,4-diethyl- 1,5-pentanediol to suppress print-through. Even though the ink, stated in Publication 5, improves image bleeding, it suffers severe print-through and low image density, like those shown in Publications 3 and 4, to render it difficult to obtain an optimum high-quality image.
The JP Laid-Open Patent Publication H8-170041 (Publication 6) shows an ink containing propylene glycol monopropylether to improve the drying performance as well as to suppress image bleeding. The ink shown in this Publication 6 is low in its effect on drying performance and image bleeding and hence it is difficult to obtain an optimum high-quality image.
On the other hand, a printer of the ink jet system, for example, a printer capable of doing high-speed printing on a recording paper sheet, that is, a line printer having a width of a recording paper sheet approximately equal to the range for ink emission, suffers considerable bleeding of images and letters/ characters and print-through.
Specifically, with the line printer, it is necessary to use the ink having superior performance of penetrating into the recording paper sheet, in view of the extremely short period of ink emission for each set of a plural number of juxtaposed nozzle lines, with each being of a length approximately equal to the width of the recording paper sheet. However, if the ink having superior penetration performance is printed on, for example, a plain printing paper sheet, the ink seeps into the paper sheet along its depth-wise direction, that is, in a direction along its thickness, with the result that the printing density is lowered. In contrast, in a line printer, if the ink having superior penetration performance is used for color printing with plural different colors, the ink of a certain color is deposited when the ink previously deposited does not have sufficient time to seep into the inside of the paper sheet, because of the extremely short ink emitting

period. This results in boundary bleeding or all-over color mixing and speckling between different colors.

Disclosure of the Invention

The present invention is proposed in consideration of the above-described problems. It is an object of the present invention to provide a recording liquid which is high in printing density, capable of preventing boundary bleeding, all-over color mixing or speckling, and print-through, and enabling printing an image of high quality. It is also an object of the present invention to provide a liquid cartridge containing the recording liquid, and an apparatus and a method for high dignity printing using the recording liquid contained in the liquid cartridge.

The present invention provides a recording liquid deposited on a support as liquid droplets to effect printing on the support, in which the recording liquid includes a dye, a solvent for dissolving or dispersing the dye and a water-soluble organic solvent having a $Cobb_{30}$ value as measured by an ultrasonic transmitting dynamic liquid penetration measurement device as prescribed in JIS P8140:1998 of $22\pm2$ g/$m^2$ and having the time of peak occurrence in a penetration characteristic curve for the plain paper sheet of not less than 0.1 sec and not longer than 0.5 sec.

The present invention also provides a liquid cartridge mounted on a liquid emitting head provided in a liquid emitting apparatus adapted for emitting a recording liquid as liquid droplets to deposit the droplets on a support to effect recording thereon, in which the liquid cartridge operates as a supply source for the recording liquid. The recording liquid contains a dye, a solvent for dissolving or dispersing the dye, and a water-soluble organic solvent having a $Cobb_{30}$ value as measured by an ultrasonic transmitting dynamic liquid penetration measurement device as prescribed in JIS P8140: 1998 of $22\pm2$ g/$m^2$ and having the time of peak occurrence in a penetration characteristic curve for the plain paper sheet of not less than 0.1 sec and not longer than 0.5 sec.

The present invention also provides a liquid emitting apparatus including an apparatus proper, a liquid emitting head provided on the apparatus proper and a liquid cartridge. The liquid emitting head includes a liquid chamber for storage of a recording liquid therein, a supply unit for supplying the recording liquid to the liquid chamber, at least one pressurizing device provided in the liquid chamber for pressurizing the recording liquid stored in the liquid chamber, and a plurality of emitting ports. The recording liquid pressurized by the pressurizing device is emitted from each liquid chamber via the emitting ports as liquid droplets towards the major surface of the support. The liquid cartridge is connected to the liquid emitting head for operating as a supply source for supplying the recording liquid to the supply part. The recording liquid contains a dye, a solvent for dissolving or dispersing the dye, and a water-soluble organic solvent having a $Cobb_{30}$ value as measured by an ultrasonic transmitting dynamic liquid penetration measurement device as prescribed in JIS P8140:1998 of $22\pm2$ g/$m^2$ and having the time of peak occurrence in a penetration characteristic curve for the plain paper sheet of not less than 0.1 sec and not longer than 0.5 sec.

The present invention also provides a liquid emitting method by a liquid emitting apparatus including an apparatus proper, a liquid emitting head provided on the apparatus proper, and a liquid cartridge. The liquid emitting head includes a liquid chamber for storage of a recording liquid therein, a supply unit for supplying the recording liquid to the liquid chamber, at least one pressurizing device provided in the liquid chamber for pressurizing the recording liquid stored in the liquid chamber, and a plurality of emitting ports. The recording liquid pressurized by the pressurizing device is emitted from each liquid chamber via the emitting ports as liquid droplets towards the major surface of the support. The liquid cartridge is connected to the liquid emitting head for operating as a supply source for supplying the recording liquid to the supply part. The method comprises emitting a recording liquid containing a dye, a solvent for dissolving or dispersing the dye, and a water-soluble organic solvent having a $Cobb_{30}$ value as measured by an ultrasonic transmitting dynamic liquid penetration measurement device as prescribed in JIS P8140:1998 of $22\pm2$ g/$m^2$ and having the time of peak occurrence in a penetration characteristic curve for the plain paper sheet of not less than 0.1 sec and not longer than 0.5 sec.

According to the present invention, in which the water-soluble organic solvent having a $Cobb_{30}$ value as measured by an ultrasonic transmitting dynamic liquid penetration measurement device as prescribed in JIS P8140:1998 of $22\pm2$ g/$m^2$, and having the time of peak occurrence in a penetration characteristic curve for the plain paper sheet of not less than 0.1 sec and not longer than 0.5 sec, is contained in the recording liquid, the recording liquid may be penetrated evenly into the support to assure a high printing density as well as to prevent printing defects such as boundary bleeding, all-over color mixing or speckling or print-through.

Other objects and advantages derived from the present invention will become more apparent from the following description which will now be made in conjunction with the accompanying drawings.

Brief Description of the Drawings

Fig.1 is a perspective view showing a printer according to the present invention.

Fig.2 is a perspective view showing a head cartridge provided in the printer.
Fig.3 is a cross-sectional view showing a head cartridge.
Fig.4 is a side view showing an ultrasonic transmitting dynamic liquid penetration measurement device.
Fig.5 is a graph showing the relationship between the immersion time and strength of the received signal in case penetration of the test liquid into a test paper sheet was measured using the printer.
Fig.6 is a cross-sectional view showing relative positions of an ink tank and an ink emitting head in the head cartridge.
Fig.7 is a cross-sectional view showing the structure of the ink emitting head.
Fig.8A is a cross-sectional view of the ink emitting head in case an air bubble has been generated in a heating resistor, and Fig.8B is a cross-sectional view of the ink emitting head in case the ink liquid droplet has been emitted from the nozzle.
Fig.9 is a side view of the printer, with a portion of the printer removed to show its inner structure.
Fig.10 is a side view of the printer, with a head cap opened and with a portion of the printer removed to show its inner structure.

Best Mode for Carrying out the Invention

Preferred embodiments of a recording liquid, a liquid cartridge, and a method and an apparatus for emitting the recording liquid, according to the present invention, will now be described with reference to the drawings.

Fig.1 shows the present invention as applied to an ink jet printer, referred to below simply as a printer 1. This printer emits the recording liquid, e.g. an ink, onto a recording paper sheet P, traveling in a preset direction, for recording/printing an image or a letter/character thereon. The printer 1 is a so-called line printer having a plural number of rows of ink emitting ports (nozzles), with the length of the row corresponding to the printing width of the recording paper sheet P. The row of the ink emitting nozzles is formed along the width of the recording paper sheet P, that is, in a direction of arrow W in Fig.1. The recording paper sheet may be a paper sheet dedicated to ink jet recording for an ink jet printer, a copy paper sheet or a plain paper sheet, such as report pad.

Referring to Figs.2 and 3, the printer 1 includes an ink jet printer head cartridge 3, referred to below simply as head cartridge 3, and a printer main 4, on which to mount the head cartridge 3. This head cartridge emits an ink 2, as a recording liquid for recording an image or letters/ characters on the recording paper sheet P. In the printer 1, the head cartridge 3 is detachably mounted on the printer main 4, and ink tanks 5y, 5m, 5c and 5k, which are liquid cartridges holding inks of different colors therein and operating as ink supply sources for the head cartridge 3, are detachably mounted on the printer 1. In this printer 1, the head cartridge 3, detachably mounted on the printer main 4, and the ink tanks 5y, 5m, 5c and 5k, holding inks of different colors therein and which are detachably mounted on the head cartridge 3, are consumable articles that may be exchanged with new ones.

In the printer 1, a tray 55a, in which is placed a stack of recording paper sheets P, is mounted on a tray fitting section 6 provided on the bottom surface on the front side of the printer main 4. The recording paper sheets P, placed on the tray 55a, are delivered into the printer main 4 from a paper sheet feed port 55 of the tray fitting section 6 to travel within the printer main 4. On the recording paper sheet P, traveling in the printer main 4 of the printer 1, letters/ characters or images, corresponding to letter/ character data or image data, supplied from an information processing apparatus, such as personal computer, are printed, and the so printed paper sheet is delivered to a paper sheet discharge port 56 on the front side of the printer main 4.

The ink 2, a recording liquid used for recording the information, such as letters/ characters or images, contains a dye, a solvent for dissolving or dispersing the dye, and a water-soluble organic solvent for improving penetration into the recording paper sheet P.

As for the dye, any suitable known dyes, pigments or colored fine polymer particles may be used either singly or in combination. In particular, a water-soluble dye is preferred. As the water-soluble dye, an acidic dye, a direct dye, a basic dye, a reactive dye or an edible dye may be used. It is preferred that the dye be suitably selected from the perspective of solubility in water, coloration or color fastness.

Specifically, the yellow-based water-soluble dyes may be enumerated by, for example, C.I. Acid Yellow 17, C.I. Acid Yellow 23, C.I. Acid Yellow 42, C.I. C.I. Acid Yellow 44, C.I. Acid Yellow 79, C.I. Acid Yellow 142, C.I. Food Yellow 3, C.I. Food Yellow 4, C.I. Direct Yellow 1, C.I. Direct Yellow 12, C.I. Direct Yellow 24, C.I. Direct Yellow 26, C.I. Direct Yellow 33, C.I. Direct Yellow 44, C.I. Direct Yellow 50, C.I. Direct Yellow 86, C.I. Direct Yellow 120, C.I. Direct Yellow 132, C.I. Direct Yellow 142, C.I. Direct Yellow 144, C.I. Direct Orange 26, C.I. Direct Orange 29, C.I. Direct Orange 62, C.I. Direct Orange 102, C.I. Basic Yellow 1, C.I. Basic Yellow 2, C.I. Basic Yellow 11, C.I. Basic Yellow 13, C.I. Basic Yellow 14, C.I. Basic Yellow 15, C.I. Basic Yellow 19, C.I. Basic Yellow 21, C.I. Basic Yellow 23, C.I. Basic Yellow 24, C.I. Basic Yellow 25, C.I. Basic Yellow 28, C.I. Basic Yellow 29, C.I. Basic Yellow 32, C.I. Basic Yellow 36, C.I. Basic Yellow 40, C.I. Basic Yellow 41, C.I. Basic Yellow 45, C.I. Basic Yellow 49, C.I. Basic Yellow 51, C.I. Basic Yellow 53, C.I. Basic Yellow 63, C.I. Basic Yellow 64, C.I. Basic Yellow 65, C.I. Basic Yellow 67, C.I. Basic Yellow 70, C.I. Basic Yellow 73, C.I. Basic Yellow 77, C.I. Basic Yellow 87, C.I. Basic Yellow 91, C.I. Reactive Yellow 1, C.I. Reactive

Yellow 5, C.I. Reactive Yellow 1, C.I. Reactive Yellow 5, C.I. Reactive Yellow 11, C.I. Reactive Yellow 13, C.I. Reactive Yellow 14, C.I. Reactive Yellow 20, C.I. Reactive Yellow 21, C.I. Reactive Yellow 22, C.I. Reactive Yellow 25, C.I. Reactive Yellow 40, C.I. Reactive Yellow 47, C.I. Reactive Yellow 51, C.I. Reactive Yellow 55, C.I. Reactive Yellow 65 and C.I. Reactive Yellow 67.

The magenta-based water-soluble dyes may be enumerated by C.I. Acid Red 1, C.I. Acid Red 8, C.I. Acid Red 13, C.I. Acid Red 14, C.I. Acid Red 18, C.I. Acid Red 26, C.I. Acid Red 27, C.I. Acid Red 35, C.I. Acid Red 37, C.I. Acid Red 42, C.I. Acid Red 52, C.I. Acid Red 82, C.I. Acid Red 87, C.I. Acid Red 89, C.I. Acid Red 92, C.I. Acid Red 97, C.I. Acid Red 106, C.I. Acid Red 111, C.I. Acid Red 114, C.I. Acid Red 115, C.I. Acid Red 134, C.I. Acid Red 186, C.I. Acid Red 249, C.I. Acid Red 254, C.I. Acid Red 289, C.I. Food Red 7, C.I. Food Red 9, C.I. Food Red 14, C.I. Direct Red 1, C.I. Direct Red 4, C.I. Direct Red 9, C.I. Direct Red 13, C.I. Direct Red 17, C.I. Food Red 20, C.I. Food Red 28, C.I. Food Red 31, C.I. Food Red 39, C.I. Direct Red 80, C.I. Direct Red 81, C.I. Direct Red 83, C.I. Direct Red 89, C.I. Direct Red 225, C.I. Direct Red 227, C.I. Basic Red 2, C.I. Basic Red 12, C.I. Basic Red 13, C.I. Basic Red 14, C.I. Basic Red 15, C.I. Basic Red 18, C.I. Basic Red 22, C.I. Basic Red 23, C.I. Basic Red 24, C.I. Basic Red 27, C.I. Basic Red 29, C.I. Basic Red 35, C.I. Basic Red 36, C.I. Basic Red 38, C.I. Basic Red 39, C.I. Basic Red 46, C.I. Basic Red 49, C.I. Basic Red 51, C.I. Basic Red 52, C.I. Basic Red 54, C.I. Basic Red 59, C.I. Basic Red 68, C.I. Basic Red 69, C.I. Basic Red 70, C.I. Basic Red 73, C.I. Basic Red 78, C.I. Basic Red 82, C.I. Basic Red 102, C.I. Basic Red 104, C.I. Basic Red 109, C.I. Basic Red 112, C.I. Reactive Red 1, C.I. Reactive Red 14, C.I. Reactive Red 17, C.I. Reactive Red 25, C.I. Reactive Red 26, C.I. Reactive Red 32, C.I. Reactive Red 37, C.I. Reactive Red 44, C.I. Reactive Red 46, C.I. Reactive Red 55, C.I. Reactive Red 60, C.I. Reactive Red 66, C.I. reactive Red 74, C.I. Reactive Red 79, C.I. Reactive Red 96 and C.I. Reactive Red 97.

The cyan-based water-soluble dyes may be enumerated by C.I. Acid Blue 9, C.I. Acid Blue 29, C.I. Acid Blue 45, C.I. Acid Blue 92, C.I. Acid Blue 249, C.I. Direct Blue 1, C.I. Direct Blue 2, C.I. Direct Blue 6, C.I. Direct Blue 15, C.I. Direct Blue 22, C.I. Direct Blue 25, C.I. Direct Blue 71, C.I. Direct Blue 76, C.I. Direct Blue 79, C.I. Direct Blue 86, C.I. Direct Blue 87, C.I. Direct Blue 90, C.I. Direct Blue 98, C.I. Direct Blue 163, C.I. Direct Blue 165, C.I. Direct Blue 199, C.I. Direct Blue 202, C.I. Basic Blue 1, C.I. Basic Blue 3, C.I. Basic Blue 5, C.I. Basic Blue 7, C.I. Basic Blue 9, C.I. Basic Blue 21, C.I. Basic Blue 22, C.I. Basic Blue 26, C.I. Basic Blue 35, C.I. Basic Blue 41, C.I. Basic Blue 45, C.I. Basic Blue 47, C.I. Basic Blue 54, C.I. Basic Blue 62, C.I. Basic Blue 65, C.I. Basic Blue 66, C.I. Basic Blue 67, C.I. Basic Blue 69, C.I. Basic Blue 75, C.I. Basic Blue 77, C.I. Basic Blue 78, C.I. Basic Blue 89, C.I. Basic Blue 92, C.I. Basic Blue 93, C.I. Basic Blue 105, C.I. Basic Blue 117, C.I. Basic Blue 120, C.I. Basic Blue 122, C.I. Basic Blue 124, C.I. Basic Blue 129, C.I. Basic Blue 137, C.I. Basic Blue 141, C.I. Basic Blue 147, C.I. Basic Blue 155, C.I. Reactive Blue 1, C.I. Basic Blue 2, C.I. Basic Blue 7, C.I. Basic Blue 14, C.I. Basic Blue 15, C.I. Basic Blue 23, C.I. Basic Blue 32, C.I. Basic Blue 35, C.I. Basic Blue 38, C.I. Basic Blue 41, C.I. Basic Blue 63, C.I. Basic Blue 80 and C.I. Basic Blue 95.

The black-based water-soluble dyes may be enumerated by C.I. Acid Black 1, C.I. Acid Black 2, C.I. Acid Black 7, C.I. Acid Black 24, C.I. Acid Black 26, C.I. Acid Black 94, C.I. Food Black 1, C.I. Food Black 2, C.I. Direct Black 19, C.I. Acid Black 22, C.I. Acid Black 32, C.I. Acid Black 38, C.I. Acid Black 51, C.I. Direct Black 56, C.I. Acid Black 71, C.I. Acid Black 74, C.I. Acid Black 75, C.I. Acid Black 77, C.I. Acid Black 154, C.I. Acid Black 168, C.I. Acid Black 171, C.I. Basic Black 2, C.I. Basic Black 8, C.I. Reactive Black 3, C.I. Reactive Black 4, C.I. Reactive Black 7, C.I. Reactive Black 11, C.I. Reactive Black 12 and C.I. Reactive Black 17.

The content of the dye is 1 to 10 wt% and more preferably 3 to 5 wt% referred to the total weight of the ink 2. The dye content is determined as the viscosity, drying performance, emission stability or coloration of the ink 2 or physical properties on storage of the printed materials are taken into account.

As the solvent for dissolving or dispersing the dye, any suitable known organic solvents may be used, in addition to water, for imparting desired physical properties to the ink, improving dissolution or dispersion of the dye in water and for preventing the ink from desiccation.

Specified examples of organic solvents include polyhydric alcohols, such as diethylene glycol, triethylene glycol, polyethylene glycol, polypropylene glycol, 1,5- pentanediol, glycerol, 1,2,6- hexane triol, 1,2,4- butane triol and petriol, polyhydric alcohol allylethers, such as ethylene glycol monophenylether or ethylene glycol monobenzylether, and nitrogen-containing heterocyclic compounds, such as N-methyl-2-pyrrolidone, N-hydroxyethyl-pyrrolidone, 1,3-dimethyl imidazoylidinone, ε-caprolactum or γ-butyrolactone. Other examples include amides, such as formamide, N-methyl formamide and N,N- dimethyl formamide, amines, such as monoethanolamine, diethanolamine, triethanolamine, monoethylamine, diethylamine or triethylamine, and sulfur-containing compounds, such as dimethylsulfoxide, sulfolane or thiodiethanol.

The amount of addition of the organic solvent is 5 to 50 wt% and more preferably 10 to 35 wt% referred to the total weight of the ink 2. This amount is determined as the viscosity, drying performance and emission stability of the ink 2 are taken into account.

There is contained in the ink 2, in addition to the solvent for dissolving or dispersing the dye, a water-soluble organic solvent for improving penetration into the recording paper sheet P.

The specified water-soluble organic solvent is a water-soluble organic solvent in which the time of peak occurrence of a penetration characteristic curve with respect to a recording paper sheet P, as measured with an ultrasonic transmitting dynamic penetration measurement apparatus, is not less than 0.1 sec and not longer than 0.5 sec. The ultrasonic transmitting dynamic penetration measurement apparatus is described in "Paper Wettability Measurements -An evaluation of EMTEC PDA": Examensaebete 1998, Processingenjor Michael Sjogren or in Patent Publication DP195 35 954.2. Referring to Fig.4, a ultrasonic transmitting dynamic penetration measurement apparatus 90 includes an ultrasonic transmitter 91, an ultrasonic receiver 92 and a sample holder 94. The sample holder is a container arranged between the transmitter and the receiver and charged with a test liquid. The sample holder is adapted for fixing a test paper sheet 93 and immersing it in the container. Examples of the ultrasonic transmitting dynamic penetration measurement apparatus 90 include a dynamic liquid penetration measurement device PDA, manufactured by EMTEC GmbH, Germany, and DPM, manufactured by EMCO GmbH in Germany.

In the ultrasonic transmitting dynamic penetration measurement apparatus 90, the ultrasonic transmitter 91 emits an ultrasonic wave signal, which is received by the ultrasonic receiver 92 via test paper sheet 93 immersed in the test liquid. In the ultrasonic transmitting dynamic penetration measurement apparatus 90, measurement may then be made of the transmission strength with lapse of time of the ultrasonic wave in the course of penetration of the test liquid into the test paper sheet 93, that is, the strength (%) of a signal received by the ultrasonic receiver 92. In the ultrasonic transmitting dynamic penetration measurement apparatus 90, a penetration characteristic curve, showing the relationship between the time of immersion in the test paper sheet 93 of the test liquid and the strength (%) of the signal received by the ultrasonic receiver 92, as shown in Fig. 5, may be obtained by measuring the strength (%) of the signal received by the ultrasonic receiver 92 in the course of penetration of the test liquid into the test paper sheet 93. The characteristics of penetration of the test liquid into the test paper sheet 93 may be obtained from this curve.

Specifically, the time of occurrence of a peak (P) in this penetration characteristic curve indicates the time since immersion of the test paper sheet 93 in the test liquid until the strength of the signal received by the ultrasonic receiver becomes maximum. It should be noted that the state of the maximum strength (%) of the received signal of the ultrasonic receiver 92 is such a state in which the potency of sizing agent added to the test paper sheet 93 is decreased and the test liquid has started to be penetrated into the cellulose fibers. That is, the time of peak occurrence in the penetration characteristic curve denotes the time when the test liquid begins to be penetrated into cellulose fibers.

Here, a water-soluble organic solvent for having the ink 2 contained in the test liquid is used and the time the test liquid begins to be penetrated into the cellulose fibers of the plain paper sheet, as the test paper sheet 93, is measured under the measurement conditions that PDA. C2 standard module (manufactured by EMTEC GmbH) is used as the ultrasonic transmitting dynamic penetration measurement apparatus 90 and an environment is set to a temperature of 25˚C and a relative humidity (RH) of 60%. The plain paper sheet used is such paper sheet sufficiently controlled in its moisture under the environment of the temperature of 25˚C and the relative humidity (RH) of 60% and having a $Cobb_{30}$ value as prescribed under JIS P8140:1998 equal to 22±2 g/$m^2$. This paper sheet may be exemplified by a MITSUBISHI PPC paper sheet manufactured by MIYSUBISHI SEISHI Co. Ltd. with $Cobb_{30}$ = 21.6±2 g/$m^2$ (an average of the front and back side values). The results of researches by the present inventors have revealed that the $Cobb_{30}$ value of the plain paper sheet, available on the market, has a wide range from a value higher than 60g/$m^2$ to approximately 15g/$m^2$, with the predominant value being approximately 20 to 24 g/$m^2$ and exhibits the tendency to boundary bleeding and all-over color mixing and speckling. The water-soluble organic solvent is used as a 2-wt% aqueous liquid adjusted at 25˚C. The concentration of 2 wt% in the aqueous liquid is used to remove the effect of different values of viscosity of the water-soluble organic solvents, with the viscosity being on the order of 1.8 cP. With the measurement, carried out under the above conditions, the characteristics of penetration of the water-soluble organic solvent into the plain paper sheet may be checked from the measured results.

Based on the above results of the measurement under the above conditions, the water-soluble organic solvent with the peak occurrence time of not less than 0.1 sec and not longer than 0.5 sec is used for the ink 2. The water-soluble organic solvent may, for example, be a compound shown for example by the following chemical formula I:

[Chemical formula 1]

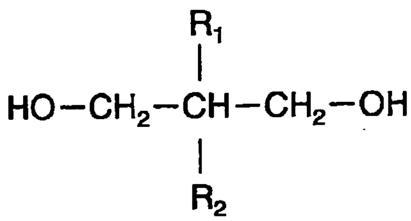

···(1)

where $R_1$ and $R_2$ denote aliphatic saturated hydrocarbon groups with $3 \leq R_1 + R_2 \leq 4, 1 \leq R_1$ and $1 \leq R_2$.

Specifically, the water-soluble organic solvents may be enumerated by compounds shown in the following Table 1. Meanwhile, the water-soluble organic solvents are not limited to those shown in the Table 1, it being only sufficient that the time of peak occurrence for the plain paper sheet with the $Cobb_{30}$ value as prescribed by JIS P8140: 1998 of $22 \pm 2$ g/$m^2$ is not less than 0.1 sec and not longer than 0.5 sec.

Table 1

| | Water-soluble organic solvent | Peak time (sec) |
|---|---|---|
| a | 2-ethyl-2-propyl-1,3-propanediol | 0.11 |
| b | 2-methyl-2-butyl-1,3-propanediol | 0.13 |
| c | 2-methyl-2-propyl-1,3-propanediol | 0.24 |
| d | 2,2-diethyl-1,3-propanediol | 0.4 |
| e | 2-methyl-2-ethyl-1,3-propanediol | 0.5 |
| f | 2-propyl-1,4-butanediol | 0.44 |

It should be noted that boundary bleeding or all-over color mixing and speckling is produced due to the ink 2 being diffused and penetrated along cellulose fibers in such a way as to avert the sizing agent. If the ink 2 is caused to be penetrated as it excessively wets the surface of the sizing agent, in order to prevent boundary bleeding or all-over color mixing and speckling, the ink 2 is penetrated excessively in the depth-wise direction of the recording paper sheet P, thus causing image print-through and lowering the printing density.

Thus, the ink 2 used contains the water-soluble organic solvent, shown in Table 1, having the time of peak occurrence for the plain paper sheet with the $Cobb_{30}$ value as prescribed by JIS P8140:1998 of $22 \pm 2$ g/$m^2$ of not less than 0.1 sec and not longer than 0.5 sec. In this case, the ink may sufficiently wet the surface of the sizing agent, added to the plain paper sheet to render it water-proofed, while the ink may also be evenly penetrated into cellulose fibers. Hence, the ink 2 is not diffused or penetrated only along the cellulose fibers, as it averts the sizing agent, so that it is possible to prevent boundary bleeding or all-over color mixing or speckling, and print-through. Moreover, high printing density may be achieved since the ink 2 is evenly penetrated into the plain paper sheet.

With the water-soluble organic solvent, with the time of peak occurrence of the penetration characteristic curve earlier than 0.1 sec, the ink 2 is penetrated excessively into the plain paper sheet, so that print-through tends to be produced. Among the water-soluble organic solvents, with the time of peak occurrence earlier than 0.1 sec, there are, for example, 2,4-diethyl-1,5-pentanediol, with the time of peak occurrence of 0.036 sec, 2-ethyl-1,3-hexanediol with the time of peak occurrence of 0.036 sec and isopropyl alcohol with the time of peak occurrence of 0.03 sec.

In contrast, if the time of peak occurrence in the penetration characteristic curve is delayed beyond 0.5 sec, penetration of the ink 2 into the plain paper sheet is worsened, resulting in ink bleeding. Among the water-soluble organic solvents, with the time of peak occurrence delayed beyond 0.5 sec, there are, for example, 2-methyl-2,4-pentanediol, 1,3-butanediol, ethylene glycol, glycerin and 2-pyrrolidone, having the time of peak occurrence of 0.54 sec, 0.56 sec, 0.59 sec, 0.69 sec and 0.62 sec, respectively.

Among the water-soluble organic solvents, for which the time of peak occurrence in the penetration characteristic curve is delayed beyond 0.5 sec, there are C7 alkylene glycols, such as 1,7-heptanediol and 3,3-dimethyl-1,5-pentanediol, as disclosed in Japanese patent 2894568. These C7 alkylene glycols improve penetration of the ink into the plain paper sheet to raise its printing quality. The time of peak occurrence of is 0.53 sec for 1,7-heptanediol and 0.52 sec for 3,3-dimethyl -1,5-pentanediol. These water-soluble organic solvents have the time of peak occurrence which is delayed beyond 0.5 sec, and hence are not able to improve all problems of boundary bleeding, all-over color mixing and speckling, printing density and print-through. Hence, the ink 2, containing the water-soluble organic solvent, with the time of peak occurrence of the penetration characteristic curve not less than 0.1 sec and not longer than 0.5 sec, may have high printing density and free from boundary bleeding, all-over color mixing or speckling, and print-through.

The content in the ink of the water-soluble organic solvent is 0.1 to 10 wt% and preferably 0.5 to 7 wt%. If the content is less than 0.1 wt%, the effect of the addition may not be obtained, whereas, if the content is higher than 10 wt%, there are cases where the ink is higher in viscosity, or the dye remains partially non-dissolved, thus affecting intermittent emission performance.

The content of the water-soluble organic solvent is preferably such that the 0-sec dynamic surface tension of the ink 2 is not less than 35 mN/m and not higher than 40 mN/m. With the 0-sec dynamic surface tension of the ink 2 not less than 35 mN/m and not higher than 40 mN/m, the ink 2 may further be improved in penetration into the recording paper sheet P. In addition, the printing density may be higher, while boundary bleeding, all-over color mixing or speckling and print-through may be prohibited more effectively. Specifically, the content of the water-soluble organic solvent is determined in dependence upon other solvents used in combination. For example, the content of 2-ethyl-2-propyl-1,3-propanediol and that of 2-propyl-1,4-butanediol are 0.1 to 1%, that of 2-methyl-2-butyl-1,3-propanediol is 1 to 3%, that of 2-methyl-2-propyl-1,3-propanediol, that of 2,2-diethyl-1,3-propanedil and that of 2-methyl-2-ethyl-1,3-propanediol are 2 to 10%.

The 0-sec dynamic surface tension is now described. The following equation (1) of the relaxation function for dynamic surface tension- time changes of a surfactant-containing liquid:

[Equation 1]

$$\gamma_t = \gamma_m + (\gamma_0 - \gamma_m)/\{1 + (t/t^*)^n\}$$

has been described in, for example, Hua X, Y, Rosen M.J: J. ColoidInterface Sci.124,652 (1988) and Takamitsu Tamura, Surface Vol.38 No.10 22-44 (2000). In the above equation, $\gamma_m$ is the surface tension when a change in the surface tension for 30 seconds has become not higher than 1 mN/m, $\gamma_0$ is the surface tension of the solvent, t* is the time when $\gamma_t$ has become intermediate between $\gamma_0$ and $\gamma_m$ and n denotes a constant.

It is noted that $\gamma_{30}$ is the surface tension when a change in the surface tension for 30 seconds has become not higher than 1 mN/m, $\gamma_0$ is the surface tension of the solvent, t* is the time when $\gamma_t$ has become intermediate between $\gamma_0$ and $\gamma_m$ and n denotes a constant. The above equation (1) of the relaxation function for dynamic surface tension -time changes of the surfactant-containing liquid, proposed by Rosen, is expanded for t = 0, as indicated in the following equation (2):

[Equation 2]

By expansion of the equation (1) for t=0, we obtain:

$$\begin{aligned}\gamma_1 &= \gamma_m + (\gamma_0 - \gamma_m)/\{1 + (0/t^*)^n\}\\ &= \gamma_m + (\gamma_0 - \gamma_m)/1\\ &= \gamma_m - \gamma_m + \gamma_0\\ &= \gamma_0\end{aligned}$$

As indicated by the above equation (2), the 0-sec dynamic surface tension may be found by measuring the static surface tension of a solvent, composed of water and the organic solvent, that is, the ink 2 less components

exhibiting surface active performance, that is, the dye, antiseptics, mold-proofing agents, dispersing agents, penetrants and surfactants, as later described. Meanwhile, if the dynamic surface tension of the solvent for the ink 2 is continuously measured as the rate of bubble formation, or the so-called bubble speed, is changed, in accordance with, for example the maximum bubble pressure method, specifically, if the dynamic surface tension is measured with the bubble speed ranging between 10 bubbles/ sec to 0.1 bubble per sec, the dynamic surface tension curve is approximately linear along the horizontal axis. In this case, even if the bubble speed is lowered, there occurs no marked sagging of the dynamic surface tension curve.

If the 0-sec dynamic surface tension of the ink 2 is lower than 35 mN/m, there is fear that the ink 2 deposited on the recording paper sheet P seeps excessively in the depth-wise direction, that is, along the thickness, of the recording paper sheet P. In such case, the printing density may be lowered, or the ink 2 may seep to the reverse side of the recording paper sheet P. If the 0-sec dynamic surface tension of the ink exceeds 40 mN/m, the ink 2 may seep slowly in the direction along the thickness of the recording paper sheet P, thus possibly causing the feathering. In particular, the feathering or print-through becomes severer in case the 0-sec dynamic surface tension of the ink exceeds 45 mN/m.

If, in addition to the dye, solvent and the water-soluble organic solvent, an ethylene oxide adduct of 2-ethyl-2-butyl -1,3-propanediol, referred to below as EBPD-EO, shown by the following chemical formula 2:

[Chemical formula 2]

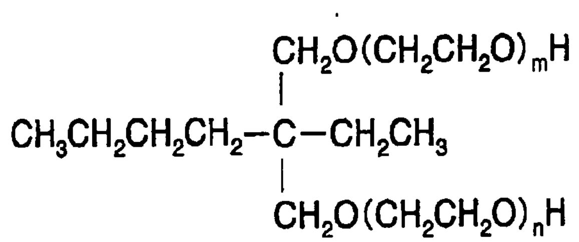

···(2)

where m and n denote integers of from 0 to 10, with $1 \leq m+n \leq 10$, is added to the ink 2, as surfactant, and the static surface tension is set to not less than 34 mN/m and not higher than 39 mN/m, printing may be made with higher printing quality.

The amount of addition of EBPD-EO ranges between 0.05 wt% and 5 wt%, preferably between 0.1 wt% and 2 wt%, based on the total weight of the ink 2. If the amount of the addition is less than 0.05 wt%, the effect of addition is nil. If the amount of the addition exceeds 5 wt%, the ink 2 may be raised excessively in viscosity, thus impairing emission stability and retarding the performance of penetration into the recording paper sheet P.

If the ink 2, with the static surface tension less than 34 mN/m, is deposited on the recording paper sheet P, there is fear that the ink seeps excessively in the depth-wise direction, that is, in the direction along the thickness of the recording paper sheet P. In this case, the printing density may be lowered, or the ink 2 may seep to the reverse side of the recording paper sheet P. If the static surface tension exceeds 45 mN/m, seeping of the ink along the thickness of the recording paper sheet P is delayed, thus possibly causing the feathering. The surface tension is measured by the Wilhermi (plate) method.

The ink 2 may be added to with known routine surfactants in a range which does not detract from the favorable operation and result of the aforementioned water-soluble organic solvents or surfactants. Examples of these known surfactants include special phenol nonionic surfactants, such as polycyclic phenol ethoxylates, and ester type non-ionic surfactants. These ester type non-ionic surfactants may be enumerated by ethylene oxide adducts of glycerite, polyethylene glycol oleate, polyoxyalkylene taloate, sorbitan layryl ester, sorbitan oleyl ester and polyoxyethylene sorbitan oleyl ester. Other examples include amide type non-ionic surfactants, such as coconut oil fatty acid diethanol amide and polyoxyethylene coconut oil fatty acid monoethanol amide. Still other examples include anionic surfactants, such as acetylene glycol, ethylene oxide adducts thereof, alcohol sulfate sodium salts, higher alcohol sulfate sodium salts, polyoxyethylene alkyl phenyl ether sulfate ammonium salts, and alkylbenzene sodium sulfonate. Further examples include cationic surfactants, such as mono-long chain alkyl cation, di-long chain alkyl cation and alkylamine oxide, and amphoteric surfactants, such as laurylamide propyl acetic acid betaine and lauryl amino acetic acid betaine. These known routine surfactants may be used either alone or in combination.

The ink 2 may be added to with, for example, viscosity adjustment agents, pH adjustment agents, antiseptics,

rust-proofing agents, and mold-proofing agents. Specific examples of the viscosity adjustment agents and the pH adjustment agents include proteins, such as gelatin and casein, natural rubber, such as gum arabic, cellulose derivatives, such as methyl cellulose, carboxy methyl cellulose and hydroxy methyl cellulose, natural polymers, such as lignin sulfonates or shellac, polyacrylates, styrene acrylic acid copolymers, polyvinyl alcohol and polyvinyl pyrrolidone. These may be used either alone or in combination. The antiseptics, rust-proofing agents and mold-proofing agents may be exemplified by, for example, benzoic acid, dichlorophene, hexachlorophene, sorbic acid, p-hydroxybenzoate and ethylene diamine tetraacetic acid (EDTA). These may be used either alone or in combination.

In preparing the above-described ink 2, the aforementioned dye, solvent, the water-soluble organic solvent and, as the case may be, the EBPD-EO, shown by the above chemical formula 2, as surfactant, are mixed together in preset proportions. The water-soluble organic solvent has the $Cobb_{30}$ value as prescribed by JIS P8140:1998 of $22\pm2$ $g/m^2$ and the time of peak occurrence for plain paper sheets of not less than 0.1 sec and not longer than 0.5 sec. The resulting product is agitated or dispersed with e.g. a screw, at ambient temperature or under heating to 40˚C to 80˚C.

As for the ink 2, described above, a yellow ink is contained in the ink tank 5y, a magenta ink is contained in the ink tank 5m, a cyan ink is contained in the ink tank 5c and a black ink is contained in the ink tank 5k, as shown in Fig.2 and 3.

The head cartridge 3, detachably mounted on the printer proper 2 of the printer 1, and the ink tanks 5y, 5m, 5c and 5k, detachably mounted on the head cartridge 3, will now be described with reference to the drawings.

The head cartridge 3, used for printing on the recording paper sheet P, is mounted from an upper surface side of the printer proper 4, that is, from the direction indicated by arrow A in Fig.1, and emits the ink 2 onto the recording paper sheet P for printing.

The head cartridge 3 comminutes the above ink 2 into fine particles, under a pressure generated by a pressure generating means of, for example, the electro-thermal or electro-mechanical converter type, to emit fine ink particles. The head cartridge 3 sprays the ink 2 in the form of fine liquid droplets onto the major surface of the recording paper sheet P. Specifically, the head cartridge 3 includes a cartridge proper 21, as shown in Figs.2 and 3. The ink tanks 5y, 5m, 5c and 5k, as vessels holding the ink 2, are loaded on this cartridge proper 21. The ink tanks 5y, 5m, 5c and 5k are sometimes referred to below simply as an ink tank.

The ink tank 5, which may be mounted on and dismounted from the head cartridge 3, includes an ink tank proper 11 fabricated on injection molding e.g. a resin material exhibiting high toughness and ink-resistant properties, such as polypropylene. This ink tank proper 11 is formed to a substantially rectangular shape with a longer side sized to be substantially equal to the width-wise size of the recording paper sheet P in use.

Specifically, the ink tank proper 11 of the ink tank 5 includes an ink container 12, holding the ink 2, and an ink supply part 13 for supplying the ink 2 from the ink container 12 into the cartridge proper 21 of the head cartridge 3.

A port for communicating with outside 14, which takes in outside air, is formed at a mid part on the upper surface of the ink container 12. The ink container 12 is able to take in air via an air inlet duct 15 provided as an extension towards inside from the port for communicating with outside 14. In the ink tank proper 11, when the ink 2 in the ink container 12 is delivered to the cartridge proper 21, an amount of air corresponding to the decreased quantity of the ink 2 in the ink container 12 is taken into the ink container from the port 14 through the air inlet duct 15.

An ink reservoir 16, as a liquid reservoir for transiently holding the ink 2, is provided at a mid part of the air inlet duct 15 for preventing the ink flowing back from the ink container 12 from flowing precipitously through the port 14 to outside. Thus, with the ink tank 5, the ink 2, flowing back through the air inlet duct 15 from the ink container 12, is transiently stored in the ink reservoir 16 to prevent the ink 2 from leaking to outside via port 14 to enable the ink 2 to be returned to the ink container 12.

The ink supply part 13 is provided at a mid part on the bottom surface of the ink container 12. This ink supply part 13 is a protuberant nozzle in communication with the ink container 12. The distal end of the nozzle is fitted into a connecting part 27 of the head cartridge 3, as later described, to interconnect the ink tank proper 11 of the ink tank 5 with the cartridge proper 21 of the head cartridge 3.

In the bottom side of the ink supply part 13, there is provided a supply port for supplying the ink 2 to the cartridge proper 21. The bottom surface of the ink tank 5 is provided with a valving mechanism for opening/ closing the supply port. Before mounting the ink tank 5 on the cartridge proper 21, a valve, not shown, of the valving mechanism closes the supply port to prevent the ink 2 flow leaking outwards from the ink tank 5. When the ink tank 5 is fitted to the cartridge proper 21, the valve clears and opens the supply port to enable the ink 2 to be supplied towards the head cartridge 3.

The ink tank proper 11 includes a retention lug 17 and an engagement step 18 as a means for securing the ink tank proper to a fitting part 22 of the cartridge proper 21. The retention lug 17 is protuberantly formed on a lateral surface on the opposite side along the long side of the ink tank 5, and is engaged by a latch lever 25 of the fitting part 22 as later described. The engagement step 18 is formed towards one end along the long side of the ink tank 5 and is engaged by a mating engagement part 26 formed on the lateral surface of the fitting part 22 as later described. The ink tank 5 is secured and fitted to the cartridge proper 21 by the retention lug 17 and the engagement step 18.

The above-described ink tank 5 includes, in addition to the above-described components, a residual ink quantity

detection unit, not shown, for detecting the quantity of the residual ink 2 in the ink container 12 and parts, also not shown, for identifying the ink tanks 5y, 5m, 5c and 5k.

The head cartridge 3, adapted to be fitted with the ink tanks 5y, 5m, 5c and 5k for the ink 2, that is, the yellow, magenta, cyan and black inks, will now be described.

Referring to Figs.2 and 3, the head cartridge 3 includes the ink tank 5 and the cartridge proper 21. The cartridge proper 21 includes mounting sections 22y, 22m, 22c and 22k, the ink tanks 5 are fitted to. The mounting sections are referred to below as a mounting section 22 when the mounting sections are referred to collectively. The cartridge proper 21 also includes an ink emitting head 23 for emitting the ink 2 and a head cap 24 for protecting the ink emitting head 2.

The mounting section 22, the ink tank 5 is fitted to, is substantially recessed in profile, in order to accommodate the four ink tanks 5 which are arrayed side by side in a direction substantially at right angles to the width-wise direction of the recording paper sheet P, that is, in a direction along the running direction of the recording paper sheet P. On the bottom surface of the mounting section 22, partitioning wall sections 22a, configured for separating the ink tanks 5y, 5m, 5c and 5k of the respective colors from one another, are arranged between the ink tanks 5y, 5m, 5c and 5k, as shown in Fig.2.

The latch levers 25 are provided on the lateral surfaces of the mounting section 22 facing the retention lugs 17 of the ink tank 5 when the ink tanks 5 are fitted to the mounting section 22. The retention lugs 17 are retained in retention openings 25a in the latch levers 25. The lateral sides of the mounting section 22 facing the engagement steps 18 of the ink tank 5 are provided with the mating engagement parts 26 engaged with the engagement steps 18. The ink tanks 2 are secured and mounted on the mounting section 22 by the retention lugs 17 of the ink tanks 5 engaging in the retention openings 25a of the latch levers 18 and by the engagement steps 18 engaging with the mating engagement part 26.

The connecting part 27 connected to the ink supply parts 13 of the ink tanks 5y, 5m, 5c and 5k when these ink tanks are mounted on the mounting sections 22y, 22m, 22c and 22k, are provided at mid parts along the lengths of the mounting sections 22y, 22m, 22c and 22k. The connecting part 27 operates as an ink supply path for supplying the ink 2 from the ink supply parts 13 of the ink tank 5 fitted to the mounting section 22 to the ink emitting head 23 provided on the bottom surface of the cartridge proper 21.

Referring to Fig.6, the connecting part 27 includes an ink reservoir 31 for storing the ink 2 supplied from the ink tank 5, and a sealing member 32 for sealing the ink supply part 13 connected to the connection part 27. The connecting part 27 also includes a filter 33 for removing impurities in the ink 2 and a valving mechanism 34 for opening/ closing the supply path to the ink emitting head 23.

The ink reservoir 31 is a void part within which to store the ink 2 supplied from the ink tank 5 and which is connected to the ink supply part 13. The sealing member 32 is provided at an upper end of the ink reservoir 31. When the ink supply part 13 of the ink tank 5 is connected to the ink reservoir 31 of the connecting part 27, the sealing member hermetically seals the spacing between the ink reservoir 31 and the ink supply part 13 to prevent the ink from leaking to outside. The filter 33 removes dust and dirt mixed into the ink 2 during mounting/ dismounting the ink tank 5 and is provided downstream of the ink reservoir 31.

When the ink 2 is emitted from the nozzle 42a of the ink emitting head 23, as later described, a valve, not shown, of the valving mechanism 34, is opened under the negative pressure generated on the ink emitting head 23 to supply the ink 2 from the ink container 12 of the ink tank 5 towards the ink emitting head 23. When the ink 2 is supplied from the ink container 12 of the ink tank 5 and the pressure towards the ink emitting head 23 is restored to the steady state, the valve of the valving mechanism 34 is closed to halt the supply of the ink 2 from the ink container 12 of the ink tank proper 11 to the ink emitting head 23.

In the above-described connecting part 27, the operation of supplying the ink 2 by the valving mechanism 34 is repeated each time the ink 2 is emitted from the nozzle 42a of the ink emitting head 23. In contrast, in the ink tank 5, when the ink 2 in the ink container 12 is supplied to the valving mechanism 34, in association operatively with the supply of the ink 2 by the valving mechanism 34, the quantity of the ink 2 in the ink container 12 is decreased. An amount of air equivalent to the decreased quantity of the ink 2 is introduced into the ink container 12 from the port 14 through the air inlet duct 15. This renders it possible to supply the ink 2 properly to the ink emitting head 23 as the pressure in the ink reservoir 12 is maintained in a balanced state.

The ink emitting head 23 is arranged along the bottom surface of the cartridge proper 21, as shown in Fig.6. The nozzles 42a, as emitting openings for emitting the ink liquid droplets i from the connecting parts 27, as will be described later, are arranged in neighboring lines, from color to color, along the width of the recording paper sheet P, as indicated by arrow W in Fig.6.

The head cap 24 is provided for protecting the ink emitting head 23, as shown in Fig.2, and is retreated from the ink emitting head 23 at the time of the printing. The head cap 24 includes a pair of engagement projections 24a, provided in the opening/ closing direction on both ends of the ink emitting head along the direction of arrow W in Fig.2, and a longitudinally extending cleaning roll 24b for sucking excess ink 2 deposited on an emitting surface 23a of the ink emitting head 23. The head cap 24 has the engagement projections 24a engaged in a pair of engagement grooves 23b

which are provided on the emitting surface 23a of the ink emitting head 23 for extending along the short side of the ink tank 5, that is, in a direction substantially at right angles to the direction of arrow W in Fig.2. The head cap is adapted to be opened/ closed along the paired engagement grooves 23, in a direction substantially at right angles to the short side direction of the inductor 5, that is, in a direction at right angles to the direction of arrow W in Fig.2. In the head cap 24, the cleaning roll 24b is run in rotation, during the opening/ closing operation, in abutting contact with the emitting surface 23a of the ink emitting head 23, to suck up excess ink to clean the emitting surface 23a of the ink emitting head 23. This cleaning roll 24b is made from highly hygroscopic materials, specifically, a sponge, a non-woven fabric or a woven fabric. Except during printing, the head cap 24 closes the emitting surface 23a to prevent the ink 2 in the ink emitting head 23 from drying.

Referring to Fig.7, the ink emitting head 23 includes a circuit substrate 41, as a base, a nozzle sheet 42, a film 43, an ink liquid chamber 44, a heater/ resistor 45 and an ink flow duct 46. A plural number of nozzles 42a are bored in the nozzle sheet 42. The film 43 separates the circuit substrate 41 and the nozzle sheet 42 from each other from one nozzle 42a to the next. The ink liquid chamber 44 pressurizes the ink 2 supplied thereto. The heater/ resistor 45 heats the ink 2, supplied to the ink liquid chamber 44, to act as a pressurizing device. The ink flow duct 46 supplies the ink 2 to the ink liquid chamber 44.

The circuit substrate 41 includes a semiconductor wafer of silicon, carrying thereon a control circuit composed of a logic IC (Integrated Circuit) and one or more driver transistors. The circuit substrate provides an upper surface part of the ink liquid chamber 44.

The nozzle sheet 42 is a sheet-like member about 10 to 15 μm thick. The nozzles 42a are bored in the nozzle sheet, with each nozzle being reduced in diameter towards the ink emitting surface 23a to provide an emission opening, approximately 20 μm in diameter, in the ink emitting surface 23a. The nozzle sheet is arranged on the opposite side of the circuit substrate 41, with the film 43 in-between, to provide a lower surface part of the ink liquid chamber 44.

The film 43 is composed of a dry film resist of the type cured on exposure to light. The film is formed for surrounding the nozzles 42a except the zones communicating with the connecting part 27. This film 43 is interposed between the circuit substrate 41 and the nozzle sheet 42 to form a lateral surface part of the ink liquid chamber 44.

The ink liquid chamber 44 is surrounded by the circuit substrate 41, nozzle sheet 42 and the film 43 to define a void part in which to pressurize the ink 2 supplied to each nozzle 42a.

The heater/ resistor 45 is arranged on the portion of the circuit substrate 41 facing the ink liquid chamber 44, and is electrically connected to a control circuit provided on the circuit substrate 41. The heater/ resistor 45 is heated under control by the control circuit to heat the ink 2 in the ink liquid chamber 44.

The ink flow duct 46 is connected to the connecting part 27, and acts as a supply part for supplying the ink 2 to the ink liquid chamber 44 from the ink tank 5 connected to the connecting part 27. That is, the ink flow duct 46 is in communication with the connecting part 27. The ink 2, supplied from the ink tank 5, flows into the ink flow duct 46 so as to be charged in the ink liquid chamber 44.

The ink emitting head 23 is provided with the heater/ resistor 45 from one ink liquid chamber 44 to the next. About 100 to 5,000 of the ink liquid chambers 44, each including the heater/ resistor 45, are provided from one color ink tank 5 to the next. In the ink emitting head 23, the heater/ resistors 45 of the ink liquid chambers 44 are selected and heated, under a command from a controller of the printer 1, as will be described subsequently. The ink 2 in the ink liquid chambers 44, associated with the so heated heater/ resistors 4, is emitted as ink liquid droplets i from the nozzles 42a associated with the ink liquid chambers 44. The ink emitting head 23 emits the ink liquid droplets i onto the recording paper sheet P to cause the ink liquid droplets i to be deposited on the recording paper sheet P to form a printed image thereon.

More specifically, with the present ink emitting head 23, a control circuit of the circuit substrate 41 exercises driving control on the heater/ resistors 45 to supply the pulse current for e.g. 1 to 3 microseconds to the selected heater/ resistors 45. This quickly heats the heater/ resistors 45 in the ink emitting head 23. An air bubble b is generated in the ink 2 in the ink liquid chamber 44 in contact with the heater/resistor 45, as shown in Fig. 8A. The air bubble b is expanded to pressurize the ink 2 in the ink liquid chambers 44 in the ink emitting head 23, as shown in Fig.8B. The ink 2 is displaced and emitted as ink liquid droplet i from the nozzle 42a. After emission of the ink liquid droplet i, the ink 2 is supplied to the ink liquid chambers 44 through the connecting part 27, and hence the ink emitting head 2 resumes its pre-emission state.

The printer proper 4, constituting the printer 1, and on which is mounted the head cartridge 3, described above, will now be described with reference to the drawings.

The printer proper 4 includes a head cartridge fitting part 51, on which is fitted the head cartridge 3, and a head cartridge holding mechanism 52 for holding and securing the head cartridge 3 to the head cartridge fitting part 51. The printer proper 4 also includes a head cap opening/ closing mechanism 53, for opening/closing the head cap, and a paper sheet feed/ discharge mechanism 54 for feeding/discharging recording paper sheets P. The printer proper 4 further includes a paper sheet feed port 55 for supplying recording paper sheets to the paper sheet feed/discharge mechanism 54, and a paper sheet discharge port 56 to output the recording paper sheet P from the paper sheet feed/ discharge

mechanism 54.

The head cartridge fitting part 51 is a recess in which to mount the head cartridge 3. To print data correctly on the running recording paper sheet, the head cartridge 3 is mounted so that the ink emitting surface 23a of the ink emitting head 23 will be substantially parallel to the sheet surface of the running recording paper sheet P. There are cases where the head cartridge 3 needs to be exchanged due to ink stop-up in the ink emitting head 23. That is, the head cartridge 3 is a consumable article, although it is not exchanged so often as the ink tank 5. Hence, the head cartridge 3 is detachably mounted on the head cartridge fitting part 51 by the head cartridge holding mechanism 52.

The head cartridge holding mechanism 52 is used for detachably holding the head cartridge 3 on the head cartridge fitting part 51. A knob 52 provided on the head cartridge 3 is retained by a biasing member, such as spring, not shown, provided within a retention opening 52b in the printer proper 4. The biasing member presses the head cartridge against a reference surface 4a provided in the printer proper 4 for holding and securing the head cartridge 3 in position.

The head cap opening/ closing mechanism 53 includes a driving unit for opening/closing the head cap 24 of the head cartridge 3. For printing, the head cap opening/ closing unit opens the head cap 24 for exposing the ink emitting head 27 to the recording paper sheet P and, on completion of printing, the head cap opening/closing unit closes the head cap 24 to protect the ink emitting head 23.

The paper sheet feed/ discharge mechanism 54 includes a driving unit for transporting the recording paper sheet P. Thus, the paper sheet feed/ discharge mechanism transports the recording paper sheet P, supplied from the paper sheet feed port 55, to the ink emitting head 23 of the head cartridge 3, and then transports the printed paper sheet, carrying thereon the ink liquid droplet i, emitted from the nozzle 52a, to the paper sheet discharge port 56, to discharge the printed paper sheet to outside the printer. In more detail, the paper sheet feed/ discharge mechanism 54 pulls out the recording paper sheet P from the tray 55a by a paper sheet feed roll 71. The recording paper sheet P, thus pulled out, is transported by a pair of separating rolls 72, 72b, rotating in the opposite directions, to a reversing roll 73, where the transporting direction of the recording paper sheet P is reversed. The recording paper sheet P is transported by a transporting belt 74 to a position facing the ink emitting head 23. The paper sheet feed port 55 is an opening via which to supply the recording paper sheet P to the paper sheet feed/ discharge mechanism 54. A larger number of the recording paper sheets P may be stacked on e.g. the tray 55a. The paper sheet discharge port 56 is an opening via which to discharge the printed paper sheets carrying the ink liquid droplets i deposited thereon.

Printing on the above-described printer 1 is controlled by a control circuit, not shown in detail. This control circuit controls the printing based on printing data entered from an information processing device provided outside. Specifically, the printer 1 is controlled by a controller controlling the driving of the head cap opening/ closing mechanism 53, paper sheet feed/ discharge mechanism 54 and a belt lift mechanism for lifting/ lowering the transporting belt 74, and the supply of current to the ink emitting head 23. Specifically, the printer 1 executes printing under the following control by the controller.

Initially, a user acts on an operating button 3a, provided on the printer proper 4, to command the controlling to start printing, for the printer 1 to execute the printing operation. When the controller has been commanded to start printing, the head cap opening/ closing mechanism 53, paper sheet feed/ discharge mechanism 54 and the belt lift mechanism of the printer 1 are actuated by the control signal from the controller to set the printing enabling condition, as shown in Fig.10.

The head cap opening/ closing mechanism 53 drives the driving unit to cause movement of the head cap 24 towards the tray 55a with respect to the head cartridge 3. This causes the nozzle 42a of the ink emitting head 23 in the printer 1 to be exposed to outside.

The paper sheet feed/ discharge mechanism 54 actuates the driving unit to cause running of the recording paper sheet P. Specifically, the paper sheet feed/discharge mechanism 54 pulls out the recording paper sheet P from the tray 55a by the paper sheet feed roll 71 and transports the so pulled out recording paper sheet P by the paired separating rolls 72, 72b rotating in opposite directions. The recording paper sheet P is transported to the reversing roll 73 where the recording paper sheet is reversed in its transporting direction and thence supplied to the transporting belt 74. The recording paper sheet P, thus transported to the transporting belt 74, is transported to a position facing the ink emitting surface 23a.

The belt lift mechanism uplifts the transporting belt 74 so that the transporting belt will run parallel to the ink emitting surface 23a of the ink emitting head 23.

In the printer 1, the current supplied to the heater/ resistor, provided on the ink emitting head 23, is controlled by the controller based on printing data supplied from an external information processing apparatus, not shown. In the printer 1, the heater/ resistors are heated, based on the printing data supplied from the information processing device, to cause ink liquid droplets i to be emitted from the nozzles 42a and deposited on the recording paper sheet P, transported to the printing position, thereby printing an image or a letter/ character composed of ink dots.

In the printer, when the ink liquid droplets i are emitted from the nozzle 42a, the same quantity of the ink 2 as that of the ink liquid droplets i emitted is replenished from the ink tank 5 via connecting part 27 into the ink liquid chamber

44. In the ink emitting head 23, the ink 2 is replenished from the ink tank 5 into the ink liquid chamber 44 each time the ink liquid droplet i is emitted.

Then, in the printer 1, the transporting belt 74 of the paper sheet feed/discharge mechanism 54 is driven by the controller to discharge the printed recording paper sheet P via paper sheet discharge port 56.

In the printer 1, the nozzles 42a for emitting the ink 2 are arranged in neighboring lines along the width of the recording paper sheet P, from color to color. For printing, the ink 2 is emitted from one row of the nozzles 42a, juxtaposed along the width of the recording paper sheet P, to the next. Thus, the head is not moved along the width of the recording paper sheet P, unlike the case of a serial printer. Consequently, the ink emitting interval of each nozzle row of the printer 1 becomes shorter, so that the printing time per recording paper sheet P may be less than in the serial printer.

In the above-described printer 1, the water-soluble organic solvent, having the $Cobb_{30}$ value as prescribed in JIS P8140:1998 of $22\pm2$ g/$m^2$ and the time of peak occurrence in a penetration characteristic curve for plain paper sheets of not less than 0.1 sec and not longer than 0.5 sec, is contained in the ink 2 used. By so doing, if, in the printer 1, an extremely short emitting period for the ink 2 is used and the ink 2 is emitted in quick succession, the ink 2 deposited on the recording paper sheet P is homogeneously penetrated into fibers, such as cellulose fibers, of the recording paper sheet P, and into the sizing agent used, thus preventing boundary bleeding, all-over color mixing or speckling, or print-through. Moreover, with the present printer 1, a high printing density may be obtained because the ink 2 is evenly penetrated into the recording paper sheet P.

Moreover, with the printer 1, in which the aforementioned water-soluble organic solvent is contained in the ink 2, a high printing density may be achieved, while it is possible to prevent boundary bleeding, all-over color mixing or speckling, or print-through. Hence, with the printer 1, the ink 2 is penetrated homogeneously even into a paper sheet dedicated for ink jet printing, so that the image obtained may be of high quality and high printing density and free from boundary bleeding, all-over color mixing or speckling or print-through.

Additionally, with the printer 1, in which the amount of addition of the water-soluble organic solvent is adjusted, with the 0-sec dynamic surface tension of the ink 2 being not less than 35 mN/m and not higher than 40 mN/m, it is possible to form an image having a high printing density and which is free from boundary bleeding, all-over color mixing or speckling, or print-through.

Moreover, with the printer 1, in which not only the water-soluble organic solvent but also EBPD-EO as surfactant is contained in the ink and the static surface tension is not less than 34 mN/m and not higher than 39 mN/m, printing may be made to a still high printing quality.

In the foregoing, the present invention has been described with reference to the case of applying the invention to a printer. However, the present invention is not limited to the above-described embodiment and may broadly be applied to other liquid emitting devices as well. For example, the present invention may be applied to facsimile or copying machines, an apparatus for emitting DNA chips into a liquid as disclosed in the JP Laid-Open Patent Publication 2002-253200, or to a liquid emitting apparatus for emitting liquid containing electrically conductive particles for forming a wiring pattern on a printed wiring board.

In the foregoing, the ink emitting head 23 in which the heating resistor 45 heats the ink 2 to emit the so heated ink 2 has been described. The present invention is not limited to this configuration and may be applied to a liquid emitting apparatus having a plural number of pressurizing devices and which is capable of supplying different amounts of the energy or supplying the energy at different timings to the respective pressurizing devices for controlling the emitting directions.

In the foregoing, an electro-thermal conversion system, in which the heating resistor 45 heats the ink 2 to emit the ink from the nozzle 42a is used. The present invention is not limited to this configuration and may be applied to an electro-mechanical conversion system, in which the ink is electro-mechanically discharged from the nozzle using an electro- mechanical transducer, such as piezo device (JP Laid-Open Patent Publications S55-65559, S62-160243 and H2-270561).

Also, in the foregoing, the line printer 1 has been taken as an instance for description. This is not restrictive and the present invention may also be applied to a serial liquid emission apparatus in which the ink head is moved in a direction substantially at right angles to the running direction of the recording paper sheet P.

Examples and Comparative Examples, in which the inks according to the present invention were actually prepared, will now be described.

<Sample 1>

In Sample 1, a yellow color ink was prepared. In preparing the yellow ink, 3 parts by weight of Acid Yellow 142, as dye, 78 parts by weight of water, as solvent, 10 parts by weight of glycerin, as another solvent, 8 parts by weight of 2-pyrrolidone, as a further solvent, and 1 part by weight of 2-ethyl-2-propyl-1,3-propanediol (a in table 1), as a water-soluble organic solvent, having the $Cobb_{30}$ value as prescribed in JIS P8140:1998 of $22\pm2$ g/$m^2$ and the time of peak occurrence in a penetration characteristic curve for plain paper sheets of 0.11 sec, were mixed together. The resulting

product was filtered through a membrane filter, with a pore size of 0.22 μm, manufactured by MILLIPORE Inc. under the trade name of Millex-0.22, to prepare a yellow-based ink. It is noted that the time of peak occurrence in a penetration characteristic curve for plain paper sheets is referred to below as time of peak occurrence in a penetration characteristic curve.

A black-based ink was then prepared. In preparing the black-based ink, 4 parts by weight of Food Black 2, as dye, 77 parts by weight of water, as solvent, 10 parts by weight of glycerin, as another solvent, 8 parts by weight of 2-pyrrolidone, as a further solvent, and 1 part by weight of 2-ethyl-2-propyl-1,3-propanediol (a in table 1), having the time of peak occurrence in the penetration characteristic curve of 0.11 sec, were mixed together. The resulting product was filtered through a membrane filter, with a pore size of 0.22 μm, manufactured by MILLIPORE Inc. under the trade name of Millex-0.22, to prepare a black-based ink.

<Sample 2>

For the sample 2, a yellow-based ink and a black-based ink were prepared in the same way as in the sample 1, except using 2-methyl-2-butyl-1,3-propanediol (b in Table 1), having the time of peak occurrence in the penetration characteristic curve of 0.13 sec, and correspondingly decreasing the amount of water to give a sum total of 100 parts by weight.

<Sample 3>

For the sample 3, a yellow-based ink and a black-based ink were prepared in the same way as in the sample 1, except using 3 parts by weight of 2-methyl-2-propyl-1,3-propanediol (c in Table 1), having the time of peak occurrence in the penetration characteristic curve of 0.24 sec, and correspondingly decreasing the amount of water to give a sum total of 100 parts by weight.

<Sample 4>

For the sample 4, a yellow-based ink and a black-based ink were prepared in the same way as in the sample 1, except using 4 parts by weight of 2,2-diethyl-1,3-propanediol (d in Table 1), having the time of peak occurrence in the penetration characteristic curve of 0.40 sec, and correspondingly decreasing the amount of water to give a sum total of 100 parts by weight.

<Sample 5>

For the sample 5, a yellow-based ink and a black-based ink were prepared in the same way as in the sample 1, except using 4 parts by weight of 2-methyl-2-ethyl-1,3-propanediol (e in Table 1), having the time of peak occurrence in the penetration characteristic curve of 0.50 sec, and correspondingly decreasing the amount of water to give a sum total of 100 parts by weight.

<Sample 6>

For the sample 6, a yellow-based ink and a black-based ink were prepared in the same way as in the sample 1, except adding 0.5 part by weight of an ethylene oxide adduct of 2-ethyl-2-butyl-1,3-propanediol, referred to below as 'EBPD-EO' (m+n = 2), shown by the chemical formula 2, as surfactant, and correspondingly decreasing the amount of water to give a sum total of 100 parts by weight.

<Sample 7>

For the sample 7, a yellow-based ink and a black-based ink were prepared in the same way as with the sample 1, except using 3 parts by weight of 2-methyl-2-propyl-1,3-propanediol (c in Table 1), having the time of peak occurrence in the penetration characteristic curve of 0.24 sec, as water-soluble organic solvent, and adding 0.5 part by weight of EBPD-EO (m+n = 2), shown by the chemical formula 2, as surfactant, and correspondingly decreasing the amount of water to give a sum total of 100 parts by weight.

<Sample 8>

For the sample 8, a yellow-based ink and a black-based ink were prepared in the same way as with the sample 1, except using 4 parts by weight of 2,2-diethyl -1,3-propanediol (d in Table 1), having the time of peak occurrence in

the penetration characteristic curve of 0.40 sec, as water-soluble organic solvent, adding 0.5 part by weight of EBPD-EO (m+n = 2), shown by the chemical formula 2, as surfactant, and correspondingly decreasing the amount of water to give a sum total of 100 parts by weight.

<Sample 9>

For the sample 9, a yellow-based ink and a black-based ink were prepared in the same way as in the sample 1, except using 4 parts by weight of 2-propyl -1,4-butanediol, having the time of peak occurrence in the penetration characteristic curve of 0.44 sec, as water-soluble organic solvent, and correspondingly decreasing the amount of water to give a sum total of 100 parts by weight.

<Sample 10>

For the sample 10, a yellow-based ink and a black-based ink were prepared in the same way as with the sample 1, except using 1 part by weight of 2,4-diethyl -1,5-pentanediol, having the time of peak occurrence in the penetration characteristic curve of 0.036 sec, as water-soluble organic solvent.

<Sample 11>

For the sample 11, a yellow-based ink and a black-based ink were prepared in the same way as with the sample 1, except using 3 parts by weight of 2-ethyl -1,3-hexanediol, having the time of peak occurrence in the penetration characteristic curve of 0.047 sec, as water-soluble organic solvent, and correspondingly decreasing the amount of water to give a sum total of 100 parts by weight.

<Sample 12>

For the sample 12, a yellow-based ink and a black-based ink were prepared in the same way as with the sample 1, except using 4 parts by weight of 2-ethyl -1,3-pentanediol, having the time of peak occurrence in the penetration characteristic curve of 0.54 sec, as water-soluble organic solvent, and correspondingly decreasing the amount of water to give a sum total of 100 parts by weight.

<Sample 13>

For the sample 13, a yellow-based ink and a black-based ink were prepared in the same way as with the sample 1, except using 4 parts by weight of 1,7-heptanediol, having the time of peak occurrence in the penetration characteristic curve of 0.53 sec, as water-soluble organic solvent, and correspondingly decreasing the amount of water to give a sum total of 100 parts by weight.

<Sample 14>

For the sample 14, a yellow-based ink and a black-based ink were prepared in the same way as with the sample 1, except using 4 parts by weight of 3,3-dimethyl-1,5-pentanediol, having the time of peak occurrence in the penetration characteristic curve of 0.52 sec, as water-soluble organic solvent, and correspondingly decreasing the amount of water to give a sum total of 100 parts by weight.

<Sample 15>

For the sample 15, a yellow-based ink and a black-based ink were prepared in the same way as with the sample 1, except using 4 parts by weight of 1,7-heptanediol, having the time of peak occurrence in the penetration characteristic curve of 0.53 sec, as water-soluble organic solvent, adding 0.5 part by weight of EBPD-EO (m+n = 2), shown by the chemical formula 2, as surfactant, and correspondingly decreasing the amount of water to give a sum total of 100 parts by weight.

<Sample 16>

For the sample 16, a yellow-based ink and a black-based ink were prepared in the same way as with the sample 1, except using 4 parts by weight of 1,7-heptanediol, having the time of peak occurrence in the penetration characteristic curve of 0.53 sec, as water-soluble organic solvent, adding 0.5 part by weight of Olfin E1010, an acetylene glycol based

non-ionic surfactant manufactured by NISSHIN KAGAKU KOGYO Co. Ltd., as surfactant, and correspondingly decreasing the amount of water to give a sum total of 100 parts by weight.

Evaluation was made of the printing density, boundary bleeding, all-over color mixing and speckling and image print-through of the inks of the respective samples. The following Table 2 shows results of the evaluation.

Table 2

| Samples | Water-soluble organic solvents | | Surfactants | 0-sec dynamic surface tension (mN/m) | Static surface tension (mN/m) | | Printing density | Boundary bleeding | All-over color mixing and speckling | Image print-through |
|---|---|---|---|---|---|---|---|---|---|---|
| | Sorts | Time of peak occurrence (sec) | | | Black | Yellow | | | | |
| 1 | 2-ethyl-2-propyl-1 ,3-propanediol | 0.11 | - | 44 | 43.8 | 43.7 | 1.17 | ◎ | ◎ | ○ |
| 2 | 2-methyl-2-butyl-1,3-propanediol | 0.13 | - | 43.5 | 43.5 | 43.3 | 1.17 | ◎ | ◎ | ○ |
| 3 | 2-methyl-2-propyl -1,3-propanediol | 0.24 | - | 38.7 | 38.6 | 38.4 | 1.19 | ◎ | ◎ | ◎ |
| 4 | 2,2-diethyl-1,3-pr opanediol | 0.4 | - | 39.5 | 39.4 | 39.1 | 1.19 | ◎ | ◎ | ◎ |
| 5 | 2-methyl-2-ethyl-1,3-propanediol | 0.5 | - | 41 | 40.5 | 40.5 | 1.17 | ○ | ○ | ○ |
| 6 | 2-ethyl-2-proyl-1 ,3-propanediol | 0.11 | EBPD-EO (m+n=2) | 44 | 38.2 | 37.9 | 1.23 | ◎ | ◎ | ○ |
| 7 | 2-methyl-2-propyl -1,3-propanediol | 0.24 | EBPD-EO (m+n=2) | 38.7 | 35.5 | 35.6 | 1.25 | ◎ | ◎ | ◎ |
| 8 | 2,2-diethyl-1,3-pr opanediol | 0.4 | EBPD-EO (m+n=2) | 39.5 | 37.1 | 36.8 | 1.24 | ◎ | ◎ | ◎ |

(continued)

| Samples | Water-soluble organic solvents | | Surfactants | 0-sec dynamic surface tension (mN/m) | Static surface tension (mN/m) | | Printing density | Boundary bleeding | All-over color mixing and speckling | Image print-through |
|---|---|---|---|---|---|---|---|---|---|---|
| | Sorts | Time of peak occurrence (sec) | | | Black | Yellow | | | | |
| 9 | 2-propyl-1,4-butanediol | 0.44 | - | 40.3 | 40.3 | 40.3 | 1.17 | ◎ | ○ | ◎ |
| 10 | 2,4-diethyl-1,5-pentanediol | 0.036 | - | 38.1 | 38 | 37.8 | 1.03 | ◎ | ○ | × |
| 11 | 2-ethyl-1,3-hexan ediol | 0.047 | - | 36.4 | 36.4 | 36.2 | 1.06 | ○ | ◎ | × |
| 12 | 2-methyl-2,4-pentanediol | 0.54 | - | 45.1 | 45.1 | 44.9 | 1.15 | Δ | Δ | Δ |
| 13 | 1,7-heptanediol | 0.53 | - | 48.9 | 48.8 | 48.7 | 1.14 | Δ | × | Δ |
| 14 | 3,3-dimethyl-1,5-pentanediol | 0.52 | - | 45 | 45 | 44.7 | 1.14 | Δ | Δ | Δ |
| 15 | 1,7-heptanediol | 0.53 | EBPD-EO (m+n=2) | 48.9 | 38.9 | 38.9 | 1.16 | Δ | Δ | Δ |
| 16 | 1,7-heptanediol | 0.53 | Olfin E1010 | 48.9 | 33.8 | 33.7 | 1.11 | Δ | Δ | × |

The printing density was measured as follows: The black inks of the respective samples were charged into ink tanks, which were then loaded on the head cartridge. A line type ink jet printer and, as a recording sheet, a copy paper sheet of the plain paper sheet, manufactured by MITSUBISHI SEISHI Co. Ltd., under the trade name of MITSUBISHI PPC paper sheet, were used. All-over printing in black was done on this recording paper sheet and reflection printing density was measured by an optical densitometer TR924 manufactured by MACBETH Inc.

The boundary bleeding was measured as follows: The yellow inks and the black inks of the respective samples were charged into ink tanks, which were then loaded on the head cartridge. A line type ink jet printer and, as a recording sheet, a copy paper sheet of the plain paper sheet, manufactured by MITSUBISHI SEISHI Co. Ltd., under the trade name of MITSUBISHI PPC paper sheet, were used. All-over printing was done on this recording paper sheet so that the respective colors are adjacent to each other and visual check was made of the degree of bleeding of the respective colors at the boundary region in the printed image.

The all-over color mixing and speckling were evaluated as follows: The yellow and black inks of the respective samples were charged into the ink tanks, which were then mounted on a head cartridge of a line type ink jet printer. All-over printing was done to 80% density on a plain copy paper sheet, a MITSUBISHI PPC paper sheet manufactured by MITSUBISHI SEISHI Co. Ltd., so that the respective colors were overlaid one on others. The color density in the printed image was visually checked as to uniformity, that is, as to whether or not the printed image suffered color unevenness.

The print-through was evaluated as follows: The printed image, obtained for evaluating the boundary bleeding, was visually checked from its back side, and evaluation was made of the degree of print-through and ink bleeding.

Using a surface tension balance CBVP-Z, manufactured by KYOWA KAIMENNKAGAKU Co. Ltd., measurement was made of the 0 sec dynamic surface tension and the static surface tension at 25˚C of the inks of the respective samples. For all samples, the values of the 0 sec dynamic surface tension were measured values of the solvent excluding the dye and the surfactant. The values of the static surface tension were measured values following adjustment of the black and yellow inks.

In Table 2, in evaluating the boundary bleeding, marks ◎ denote that there occurs no color bleeding at the boundary part, and marks ○ denote that the image quality is of no problem, but minor color bleeding is noticed at the boundary part. Also, marks Δ denote that that there is color bleeding which deteriorates the image quality is noticed at the boundary part, and marks × denote that color bleeding is occurring throughout the boundary part and the image is deteriorated severely in quality.

Also, in Table 2, in evaluating the all-over color mixing and speckling, marks ◎ denote that there occurs no color unevenness in the all-over coated image, and marks ○ denote that the image quality is of no problem but minor color unevenness is noticed at the boundary part. Also, marks Δ denote that color unevenness which deteriorates the image quality is noticed, and marks × denote that color unevenness is noticed throughout the image in its entirety and the image is deteriorated severely in quality.

Additionally, in Table 2, in evaluating the image print-through, marks ◎ denote that there occurs only little image print-through, and marks ○ denote that the image quality is of no problem even though print-through is noticed. Also, marks Δ denote that partial print-through, that is, spot-like ink print-through with apparent bleeding, is noticed, and marks × denote that image print-through is noticed throughout the image in its entirety.

It is seen from the results shown in Table 2 that the yellow and black inks of the samples 1 to 9 are better than those of the samples 10 to 16 in the evaluation of the printing density, boundary bleeding, all-over color mixing and speckling, and image print-through in their entirety.

In the samples 10 and 11, the time of peak occurrence in the penetration characteristic curve of the water-soluble organic solvent contained in the ink is 0.036 sec and 0.047 sec, thus earlier than 0.1 sec. Hence, on printing on a plain recording paper sheet, penetration of the ink into the recording paper sheet becomes dominant to cause print-through in the entire image. Also, in the samplers 10 and 11, penetration of the ink into the recording paper sheet is high, thus affecting the printing density.

In the samples 12 to 16, the time of peak occurrence in the penetration characteristic curve of the water-soluble organic solvent is delayed beyond 0.5 sec. Hence, penetration of the ink into the recording paper sheet is worsened thus producing boundary bleeding or color unevenness responsible for deterioration in the image quality. Also, in the samples 12 to 16, penetration of the ink into the recording paper sheet is worsened to cause spot-like print-through to the back surface side of the recording paper sheet.

In the samples 1 to 9, as contrasted to the samples 10 to 16, the time of ink occurrence in the penetration characteristic curve of the water-soluble organic solvent contained in the ink is not less than 0.1 sec and not longer than 0.5 sec. this results in the ink being penetrated evenly in the fibers and the sizing agent of the recording paper sheet, thus preventing the ink from being diffused and penetrated only along the fibers. In the samples 1 to 9, there is no color bleeding nor color unevenness at the boundary part, while print-through is scarcely produced, thus again preventing the boundary bleeding, all-over color mixing or speckling or print-through. Moreover, in the samples 1 to 9, the ink is evenly penetrated into the recording paper sheet to ensure high optimal printing density.

Moreover, in the samples 3, 4, 7 and 8, the 0-sec dynamic surface tension is not lower than 35 mN/m and not

higher than 40 mN/m. In addition, in the sample 3, the static surface tension is not less than 34 mN/m and not higher than 39 mN/m and, in the samples 7 and 8, EBPD-EO is contained in the ink as surfactant and the static surface tension is not less than 34 mN/m and not higher than 39 mN/m. Hence, the printing density is high with these samples, thus more effectively preventing the boundary bleeding, all-over color mixing or speckling and print-through. That is, in the samples 3, 7 and 8, the evaluation of printing density, boundary bleeding, all-over color mixing or speckling and print-through was optimum in their entirety.

Thus, if it is desired to prepare the ink having a high printing density and free from boundary bleeding, all-over color mixing or speckling or print-through especially in case of using a plain paper sheet as the recording paper sheet, it is crucial that the water-soluble organic solvent, having the time of peak occurrence in the penetration characteristic curve of not less than 0.1 sec and not longer than 0.5 sec is contained in the ink, the 0-sec dynamic surface tension is set to not less than 35 mN/m and not higher than 40 mN/m, EBPD-EO is contained as a surfactant, and that the static surface tension is set to not lower than 34 mN/m and not higher than 39 mN/m.

Although the present invention has so far been described with reference to preferred embodiments, the present invention is not to be restricted to the embodiments. It is to be appreciated that those skilled in the art can change or modify the embodiments without departing from the scope and spirit of the invention.

**Claims**

1. A recording liquid deposited on a support as liquid droplets to effect printing on said support, comprising:

   a dye;
   a solvent for dissolving or dispersing said dye; and
   a water-soluble organic solvent having a $Cobb_{30}$ value as measured by an ultrasonic transmitting dynamic liquid penetration measurement device, as prescribed in JIS P8140:1998, of $22 \pm 2$ g/m$^2$, and having the time of peak occurrence in a penetration characteristic curve for a plain paper sheet of not less than 0.1 sec and not longer than 0.5 sec.

2. The recording liquid according to claim 1 wherein the 0 sec dynamic surface tension is not less than 35 mN/m and not higher than 40 mN/m.

3. The recording liquid according to claim 1 wherein the water-soluble organic solvent is a compound shown by the following chemical formula 1:

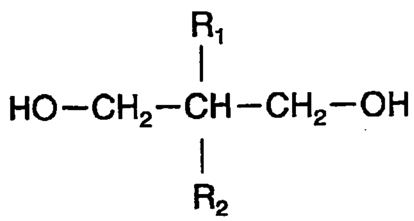

···(1)

where $R_1$ and $R_2$ each denote an aliphatic saturated hydrocarbon group with $3 \leq R_1+R_2 \leq 4$, $1 \leq R_1$ and $1 \leq R_2$.

4. The recording liquid according to claim 3 wherein said water-soluble organic solvent is at least one of 2-ethyl-2-propyl-1,3-propanediol, 2-methyl-2-butyl-1,3-propanediol, 2-methyl-2-propyl-1,3-propanediol, 2,2-diethyl-1,3-propanediol, 2-methyl-2-ethyl-1,3-propanediol and 2-propyl-1,4-butanediol.

5. The recording liquid according to claim 1 wherein the recording liquid further contains a surfactant and has the static surface tension not less than 34 mN/m and not higher than 39 mN/m

6. The recording liquid according to claim 5 wherein said surfactant contains a compound shown by the following

chemical formula 2:

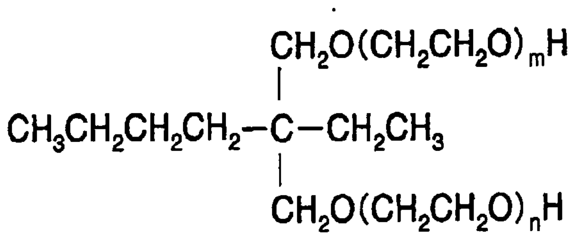

···(2)

where m and n denote integers of from 0 to 10, with $1 \leq m+n \leq 10$

**7.** A liquid cartridge mounted on a liquid emitting head provided in a liquid emitting apparatus adapted for emitting a recording liquid as liquid droplets to deposit the droplets on a support to effect recording thereon; said liquid cartridge operating as a supply source for said recording liquid;
said recording liquid containing a dye, a solvent for dissolving or dispersing said dye, and a water-soluble organic solvent having a $Cobb_{30}$ value as measured by an ultrasonic transmitting dynamic liquid penetration measurement device, as prescribed in JIS P8140:1998, of $22 \pm 2$ g/m$^2$, and having the time of peak occurrence in a penetration characteristic curve for a plain paper sheet of not less than 0.1 sec and not longer than 0.5 sec.

**8.** The liquid cartridge according to claim 7 wherein the 0 sec dynamic surface tension is not less than 35 mN/m and not higher than 40 mN/m.

**9.** The liquid cartridge according to claim 7 wherein the water-soluble organic solvent is a compound shown by the following chemical formula 1:

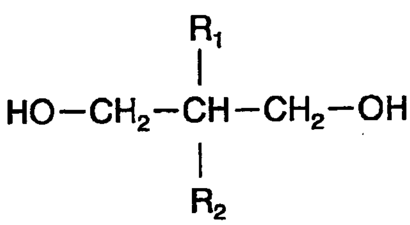

···(1)

where $R_1$ and $R_2$ each denote an aliphatic saturated hydrocarbon group with $3 \leq R_1+R_2 \leq 4$, $1 \leq R_1$ and $1 \leq R_2$.

**10.** The liquid cartridge according to claim 9 wherein said water-soluble organic solvent is at least one of 2-ethyl-2-propyl-1,3-propanediol, 2-methyl-2-butyl-1,3-propanediol, 2-methyl-2-propyl-1,3-propanediol, 2,2-diethyl-1,3-propanediol, 2-methyl-2-ethyl-1,3-propanediol and 2-propyl-1,4-butanediol.

**11.** The liquid cartridge according to claim 7 wherein the recording liquid further contains a surfactant and has the static surface tension of not less than 34 mN/m and not higher than 39 mN/m

**12.** The liquid cartridge according to claim 11 wherein said surfactant contains a compound shown by the following chemical formula 2:

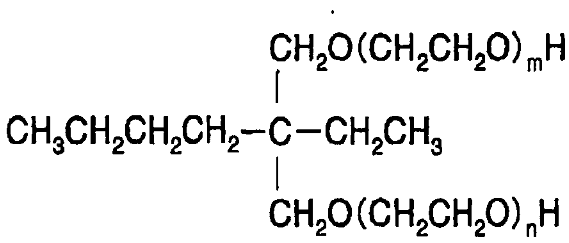

…(2)

where m and n denote integers of from 0 to 10, with $1 \leq m+n \leq 10$

**13.** A liquid emitting apparatus comprising:

an apparatus proper;

a liquid emitting head provided on said apparatus proper; said liquid emitting head including a liquid chamber for storage of a recording liquid therein, a supply unit for supplying said recording liquid to said liquid chamber, at least one pressurizing device provided in said liquid chamber for pressurizing said recording liquid stored in said liquid chamber, and a plurality of emitting ports; said recording liquid pressurized by said pressurizing device being emitted from each liquid chamber via said emitting ports as liquid droplets towards the major surface of said support; and

a liquid cartridge connected to said liquid emitting head for operating as a supply source for supplying said recording liquid to said supply part; wherein

said recording liquid contains a dye, a solvent for dissolving or dispersing said dye, and a water-soluble organic solvent having a $Cobb_{30}$ value as measured by an ultrasonic transmitting dynamic liquid penetration measurement device, as prescribed in JIS P8140:1998, of $22 \pm 2$ g/m$^2$, and having the time of peak occurrence in a penetration characteristic curve for a plain paper sheet of not less than 0.1 sec and not longer than 0.5 sec.

**14.** The liquid emitting apparatus according to claim 13 wherein the 0 sec dynamic surface tension is not less than 35 mN/m and not higher than 40 mN/m.

**15.** The liquid emitting apparatus according to claim 13 wherein the water-soluble organic solvent is a compound shown by the following chemical formula 1:

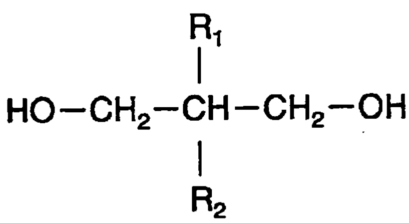

…(1)

where $R_1$ and $R_2$ each denote an aliphatic saturated hydrocarbon group with $3 \leq R_1+R_2 \leq 4$, $1 \leq R_1$ and $1 \leq R_2$.

**16.** The liquid emitting apparatus according to claim 15 wherein said water-soluble organic solvent is at least one of 2-ethyl-2-propyl-1,3-propanediol, 2-methyl-2-butyl-1,3-propanediol, 2-methyl-2-propyl-1,3-propanediol, 2,2-diethyl-1,3-propanediol, 2-methyl-2-ethyl-1,3-propanediol and 2-propyl-1,4-butanediol.

**17.** The liquid emitting apparatus according to claim 13 wherein the recording liquid has surface active performance and has the static surface tension not less than 34 mN/m and not higher than 39 mN/m

**18.** The liquid emitting apparatus according to claim 17 wherein said surfactant contains a compound shown by the following chemical formula 2:

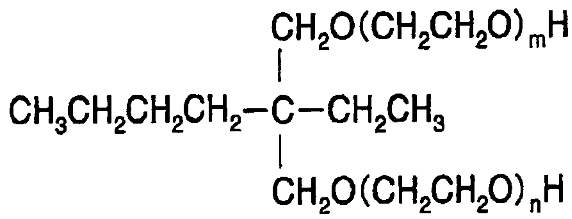

···(2)

wherein m and n denote integers of from 0 to 10, with $1 \leq m+n \leq 10$.

**19.** The liquid emitting apparatus according to claim 13 wherein said emitting ports of said liquid emitting head are juxtaposed side-by-side.

**20.** A liquid emitting method with a liquid emitting apparatus, said liquid emitting apparatus including an apparatus proper, a liquid emitting head provided on said apparatus proper, said liquid emitting head including a liquid chamber for storage of a recording liquid therein, a supply unit for supplying said recording liquid to said liquid chamber, at least one pressurizing device provided in said liquid chamber for pressurizing said recording liquid stored in said liquid chamber, and a plurality of emitting ports, said recording liquid pressurized by said pressurizing device being emitted from each liquid chamber via said emitting ports as liquid droplets towards the major surface of said support, and a liquid cartridge connected to said liquid emitting head for operating as a supply source for supplying said recording liquid to said supply part; said method comprising
emitting a recording liquid containing a dye, a solvent for dissolving or dispersing said dye, and a water-soluble organic solvent having a $Cobb_{30}$ value as measured by an ultrasonic transmitting dynamic liquid penetration measurement device as prescribed in JIS P8140:1998 of $22 \pm 2$ g/$m^2$ and having the time of peak occurrence in a penetration characteristic curve for a plain paper sheet of not less than 0.1 sec and not longer than 0.5 sec.

**21.** The liquid emitting method according to claim 20 wherein the 0 sec dynamic surface tension is not less than 35 mN/m and not higher than 40 mN/m.

**22.** The liquid emitting method according to claim 20 wherein the water-soluble organic solvent is a compound shown by the following chemical formula 1:

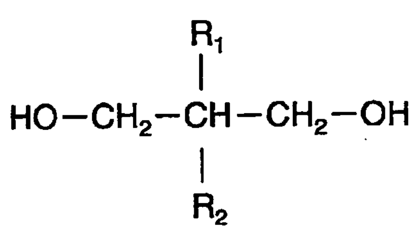

···(1)

where $R_1$ and $R_2$ each denote an aliphatic saturated hydrocarbon group with $3 \leq R_1+R_2 \leq 4$, $1 \leq R_1$ and $1 \leq R_2$.

**23.** The liquid emitting method according to claim 22 wherein said water-soluble organic solvent is at least one of 2-ethyl-2-propyl-1,3-propanediol, 2-methyl-2-butyl-1,3-propanediol, 2-methyl-2-propyl-1,3-propanediol, 2,2-diethyl-1,3-propanediol, 2-methyl-2-ethyl-1,3-propanediol and 2-propyl-1,4-butanediol.

**24.** The liquid emitting method according to claim 20 wherein the recording liquid has surface active performance and has the static surface tension not less than 34 mN/m and not higher than 39 mN/m

**25.** The liquid emitting method according to claim 24 wherein said surfactant contains a compound shown by the following chemical formula 2:

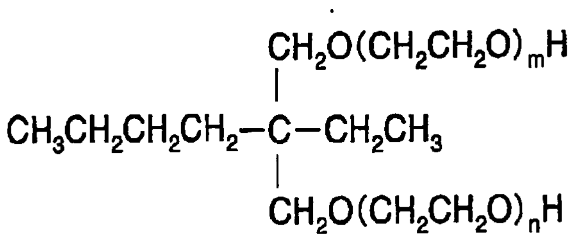

···(2)

wherein m and n denote integers of from 0 to 10, with $1 \leq m+n \leq 10$.

**26.** The liquid emitting method according to claim 20 wherein said emitting ports of said liquid emitting head are juxtaposed side-by-side.

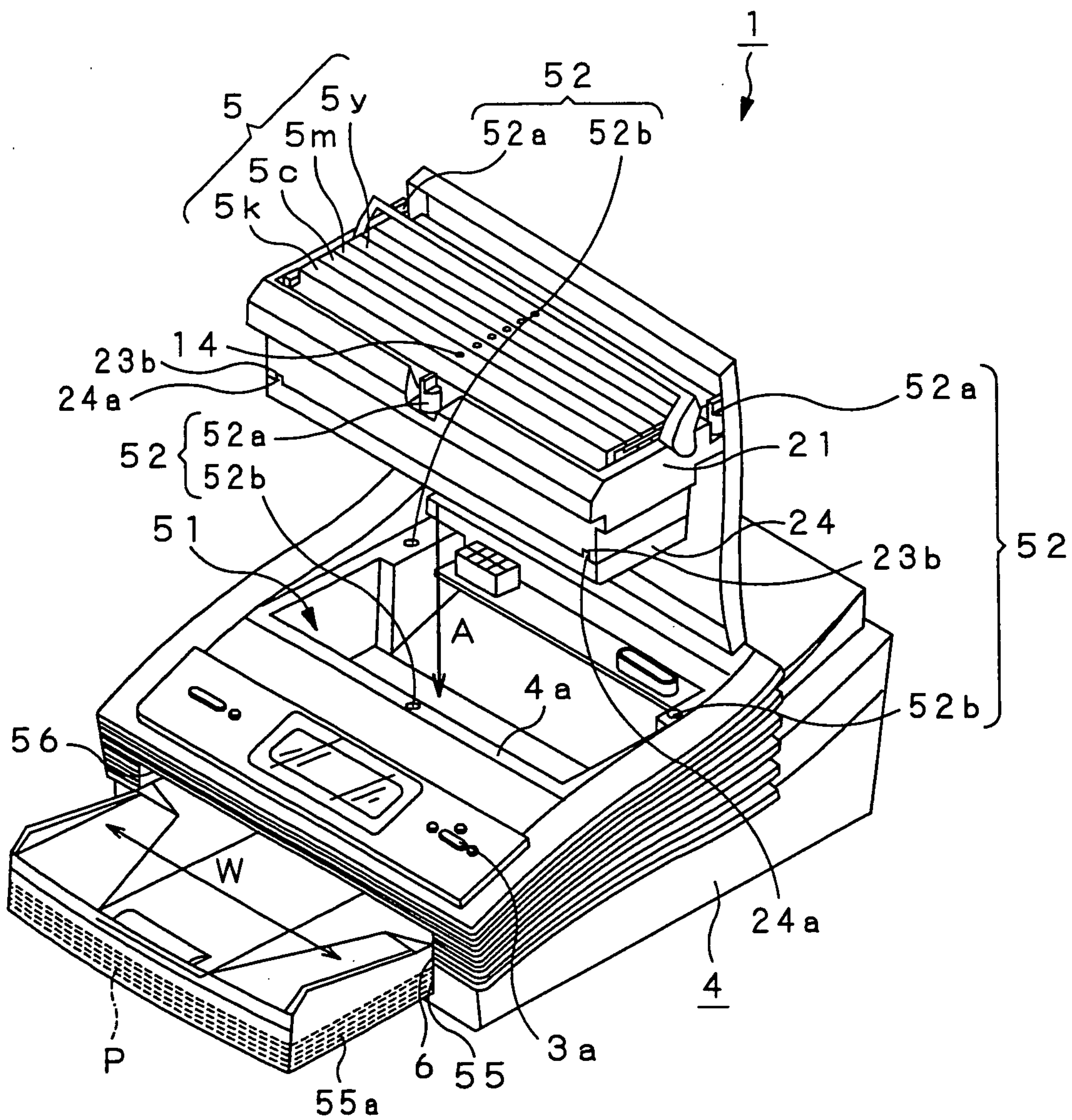
1
5
5y
5m
5c
5k
52
52a
52b
14
23b
24a
52
52a
52b
52a
21
51
24
23b
52
A
4a
52b
56
W
24a
3a
4
P
6
55
55a

FIG.1

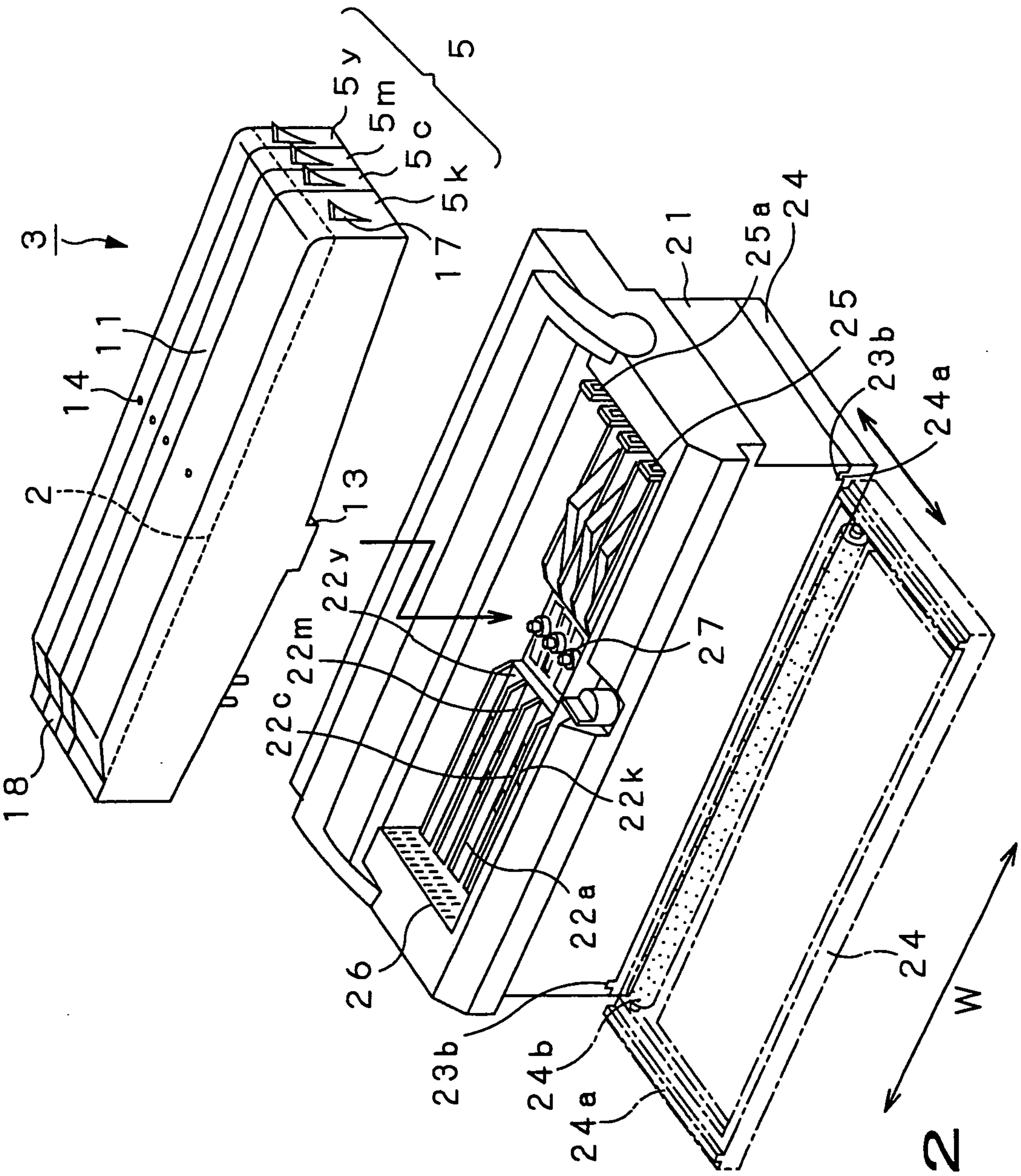
3
5
5y
5m
5c
5k
17
11
14
2
13
18
21
25a
24
25
23b
24a
22y
22m
22c
27
22k
22a
26
23b
24b
24a
24
W

FIG.2

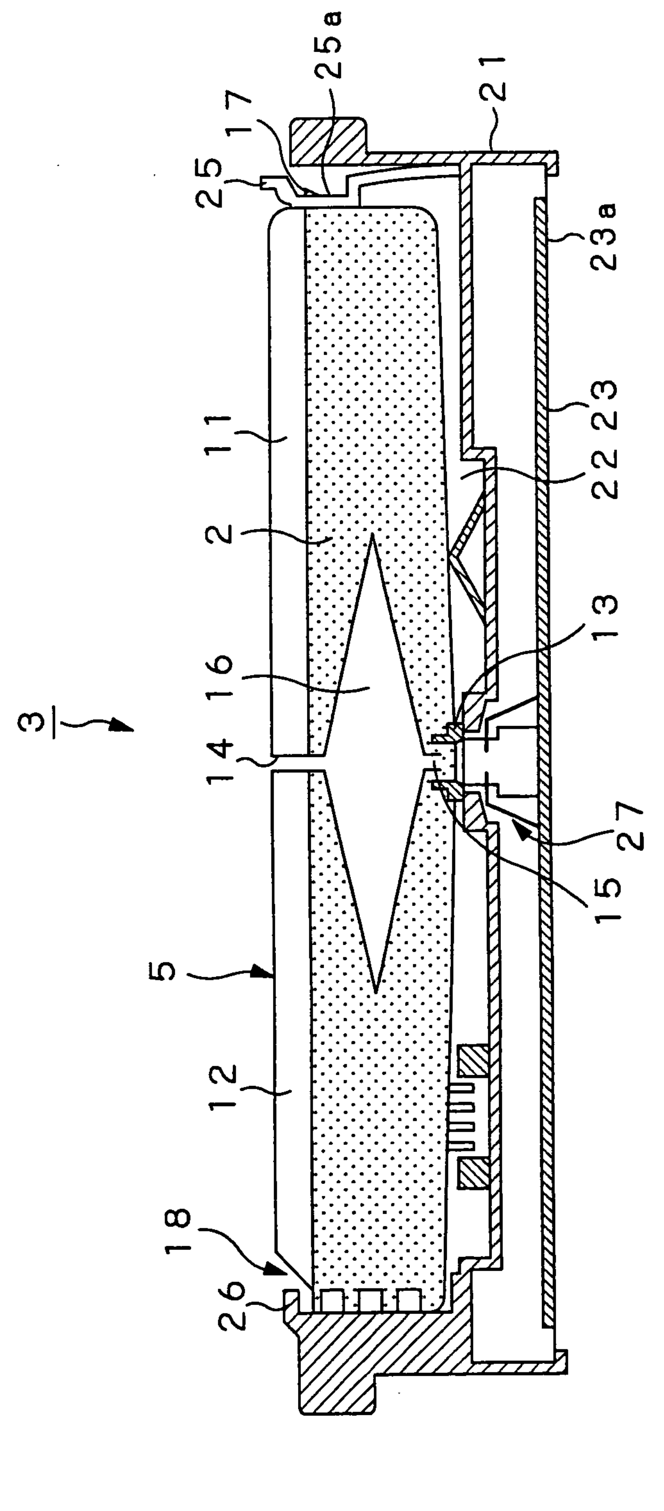


FIG.3

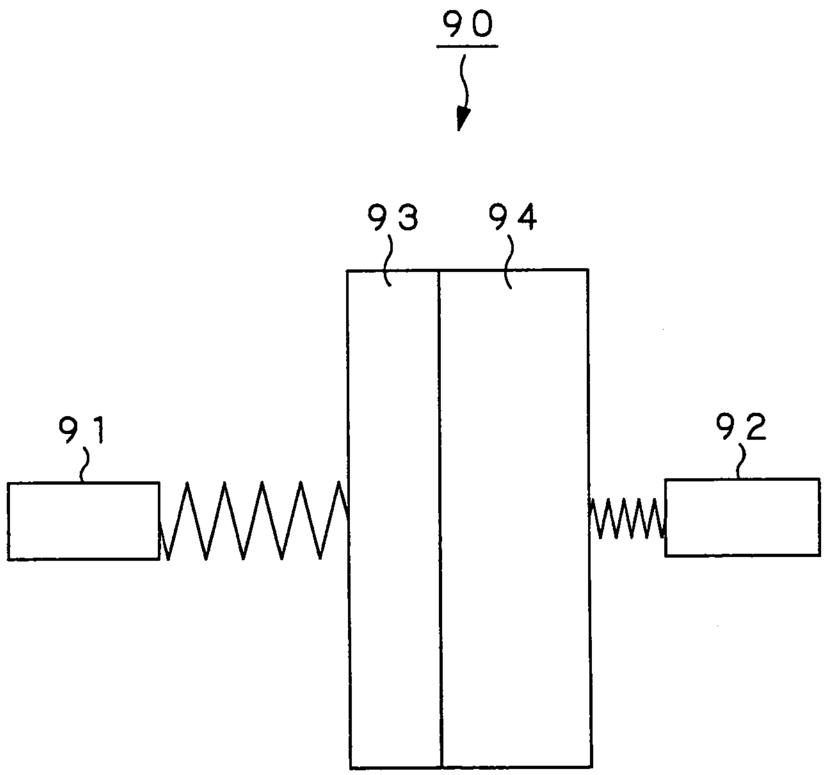


FIG.4

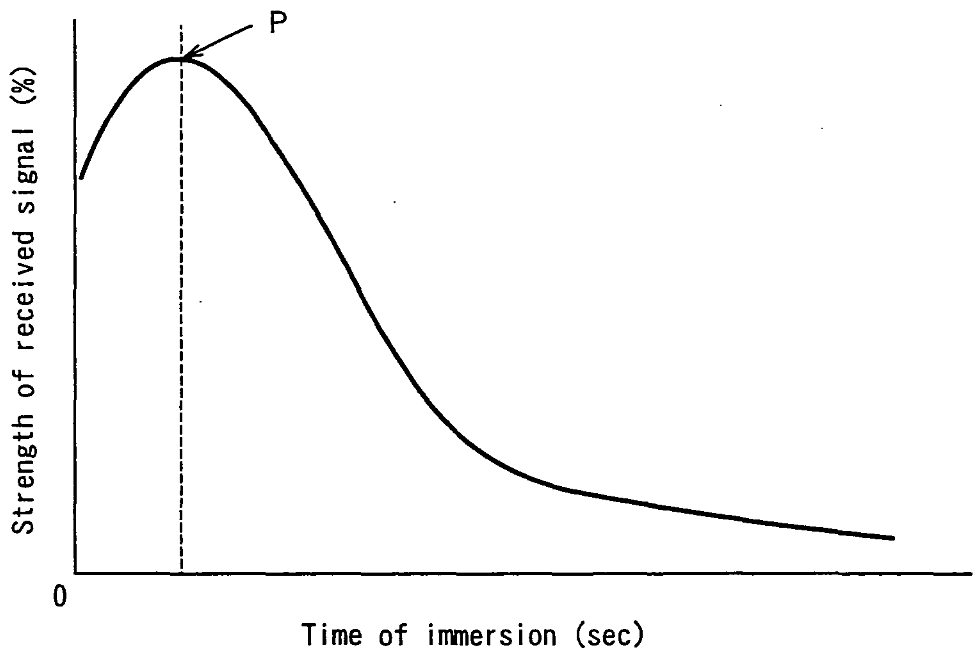


FIG.5

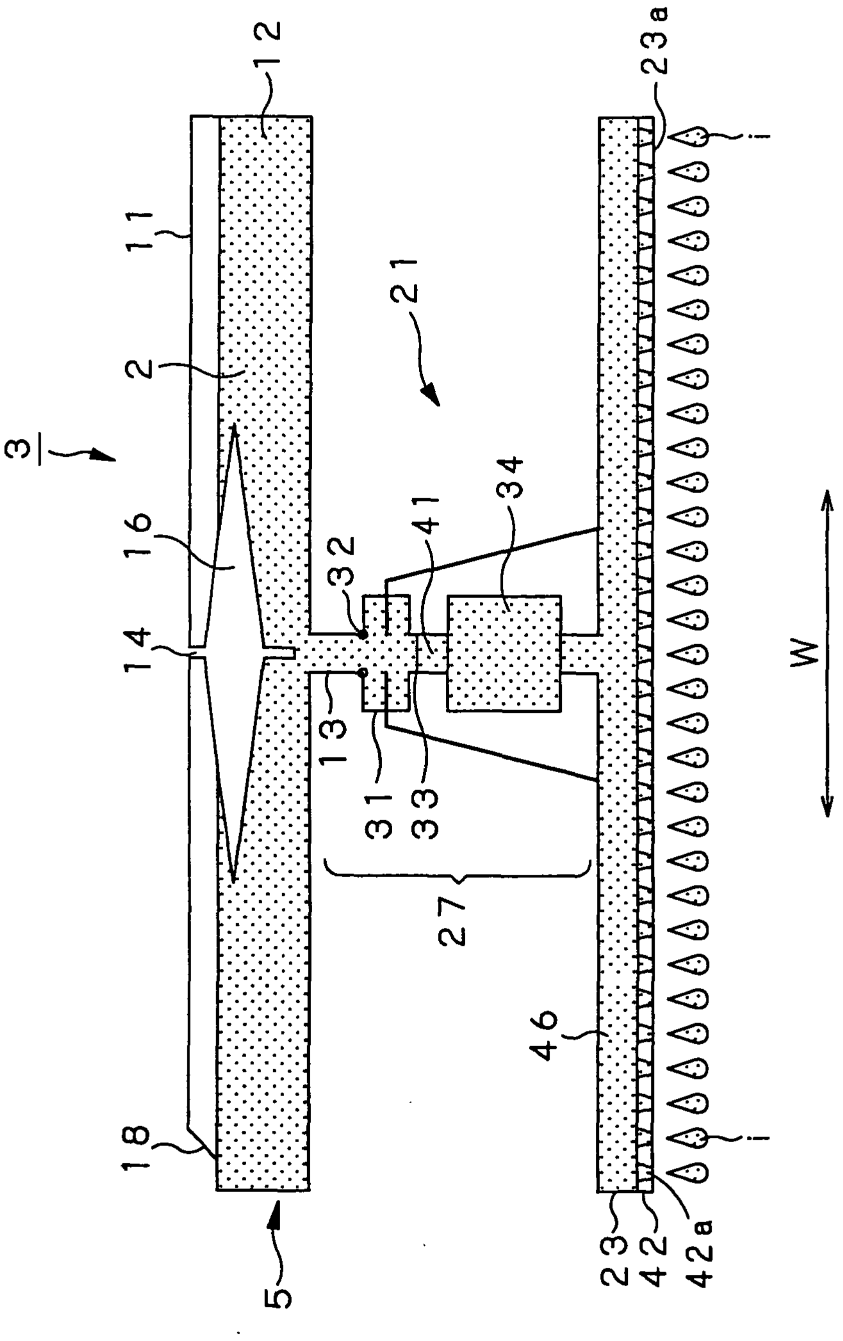


FIG.6

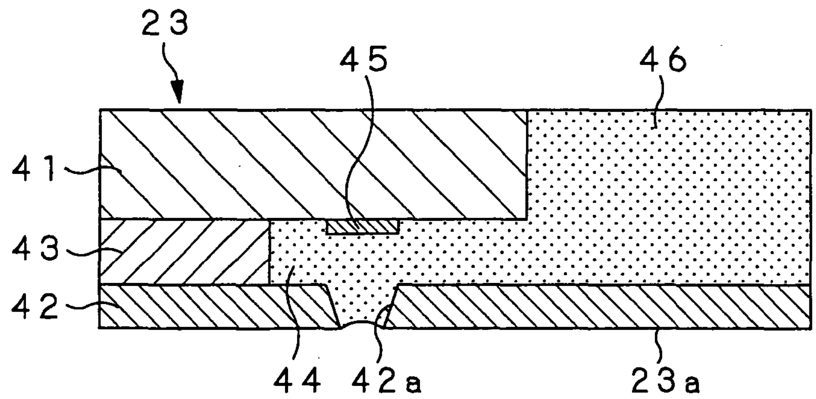


FIG.7

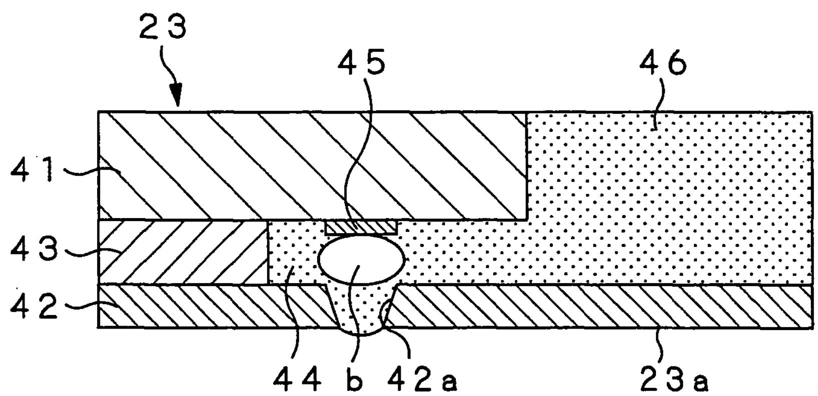


FIG.8A

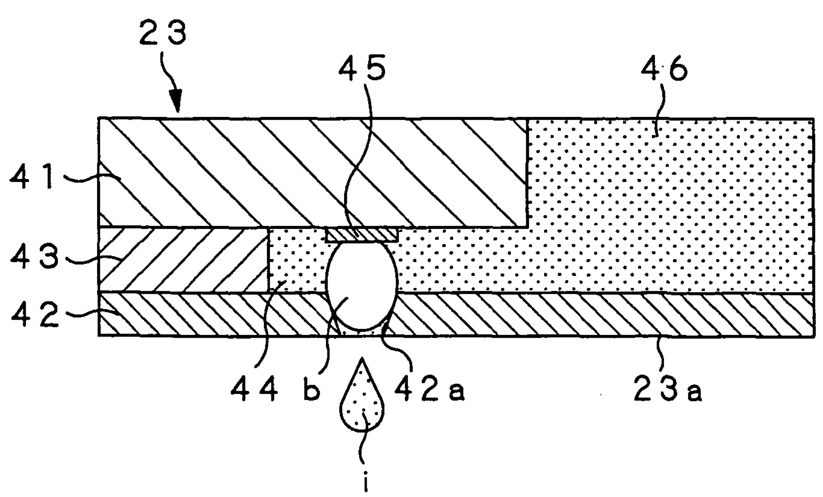


FIG.8B

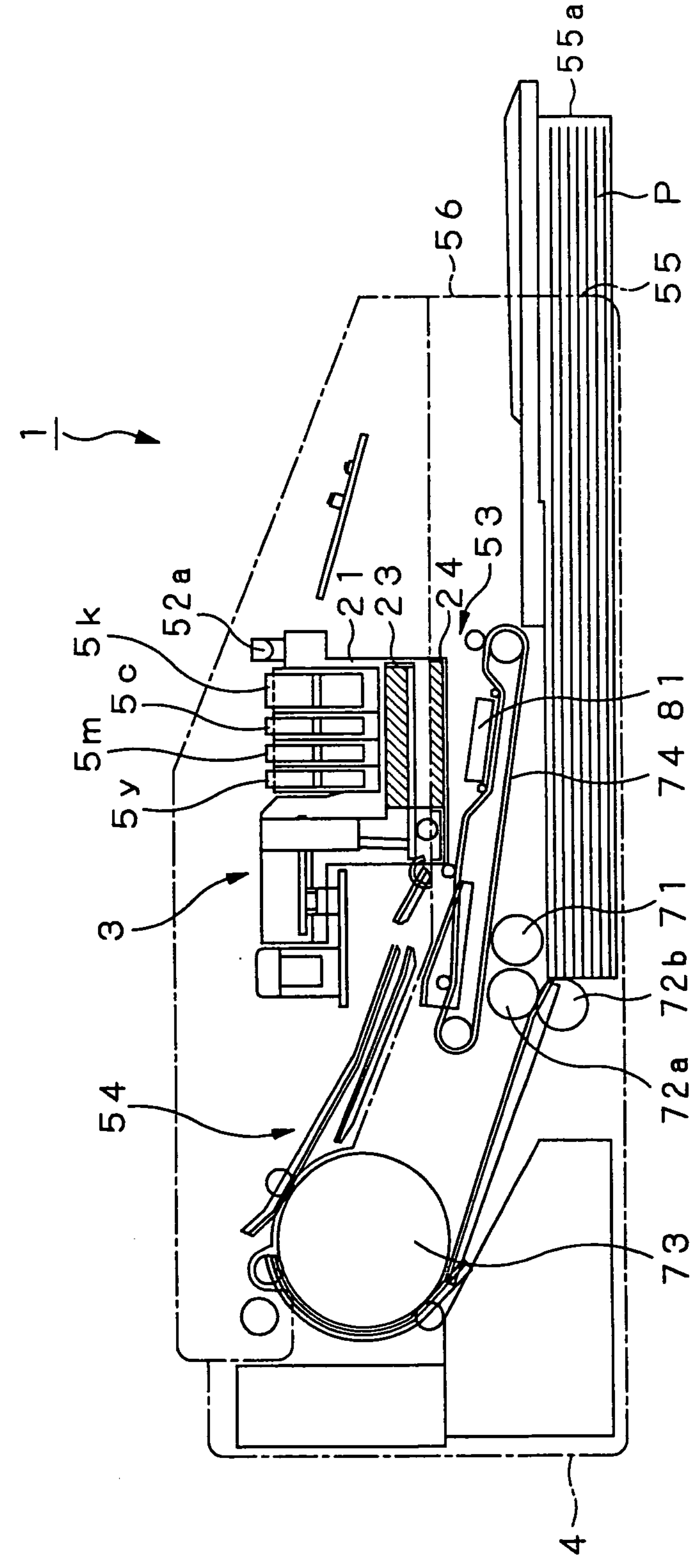


FIG.9

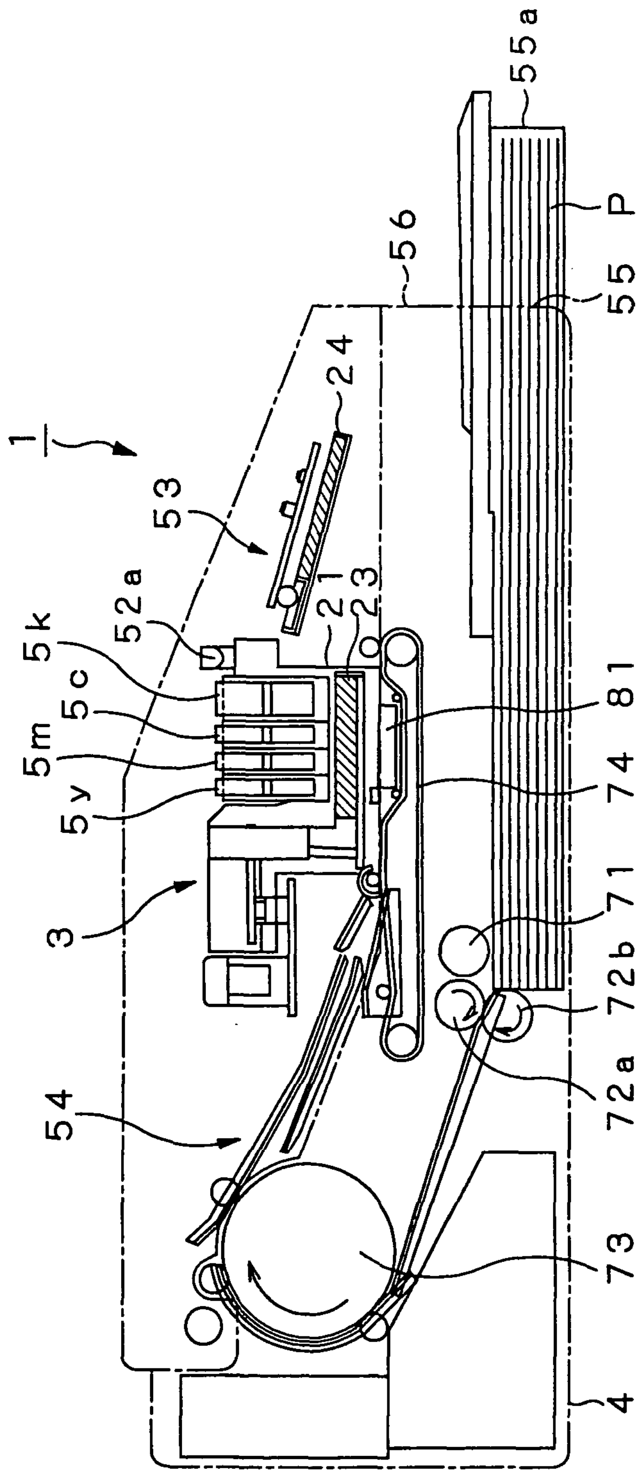


FIG. 10

**INTERNATIONAL SEARCH REPORT**

International application No.
PCT/JP2005/022980

A. CLASSIFICATION OF SUBJECT MATTER
***C09D11/00***(2006.01), ***B41J2/01***(2006.01), ***B41M5/00***(2006.01)

According to International Patent Classification (IPC) or to both national classification and IPC

B. FIELDS SEARCHED

Minimum documentation searched (classification system followed by classification symbols)
B41J2/01-2/21, B41M5/00, C09D11/00-11/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br><br>Y | JP 2004-137357 A (Ricoh Co., Ltd.),<br>13 May, 2004 (13.05.04),<br>Claims; examples<br>(Family: none) | 1-5,7-11,<br>13-17,19-24,<br>26<br>6,12,18,25 |
| X<br><br><br>Y | JP 2004-75768 A (Konica Minolta Holdings Kabushiki Kaisha),<br>11 March, 2004 (11.03.04),<br>Claims; examples<br>(Family: none) | 1-5,7-11,<br>13-17,19-24,<br>26<br>6,12,18,25 |
| X<br><br><br>Y | JP 2004-59932 A (Hewlett-Packard Development Co., L.P.),<br>26 February, 2004 (26.02.04),<br>Claims; examples<br>& EP 1391489 A1 | 1-5,7-11,<br>13-17,19-24,<br>26<br>6,12,18,25 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 March, 2006 (17.03.06) | 04 April, 2006 (04.04.06) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2005/022980

C (Continuation). DOCUMENTS CONSIDERED TO BE RELEVANT

| Category* | Citation of document, with indication, where appropriate, of the relevant passages | Relevant to claim No. |
|---|---|---|
| X<br><br><br>Y | JP 2003-268277 A (Ricoh Co., Ltd.),<br>25 September, 2003 (25.09.03),<br>Claims; examples<br>(Family: none) | 1-5,7-11,<br>13-17,19-24,<br>26<br>6,12,18,25 |
| Y | JP 2003-192966 A (Sakata Inx Corp.),<br>09 July, 2003 (09.07.03),<br>Claims; examples<br>(Family: none) | 6,12,18,25 |

Form PCT/ISA/210 (continuation of second sheet) (April 2005)

**INTERNATIONAL SEARCH REPORT**

International application No.
PCT/JP2005/022980

[Concerning the subject of search for claims 1 to 26]

Only specific water soluble organic solvents are disclosed in the description within the meaning of PCT Article 5 as "a water soluble organic solvent of which the peak appearance time in a penetration characteristic curve for plain paper having a $Cobb_{30}$ value, specified in JIS P 8140:1998 and measured with an ultrasonic transmission dynamic liquid penetration measuring device, of 22 ± 2 $g/m^2$ is not less than 0.1 sec and not more than 0.5 sec" described in claim 1, and, thus, claim 1 does not satisfy the requirement of clearness as provided for in PCT Article 6.

Further, it is difficult even in view of the common general technical knowledge at the time of filing to specify the range of the above water soluble organic solvent. Thus, claim 1 does not satisfy the requirement of clearness as provided for in PCT Article 6.

Accordingly, the search was made for recording liquids containing water soluble organic solvents (water soluble organic solvents described in Table 1) concretely disclosed in the description.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004374465 A
- JP H6023793 B
- JP 56057862 A
- JP H6157959 A
- JP 2003003100 A
- JP 2003253167 A
- JP H8170041 A
- JP 2894568 B
- JP 2002253200 A
- JP 55065559 A
- JP 62160243 A
- JP H2270561 A


### Non-patent literature cited in the description


- *Paper Wettability Measurements -An evaluation of EMTEC PDA,* 1998
- **HUA X, Y ; ROSEN M.J.** *J. ColoidInterface Sci.,* 1988, vol. 124, 652
- **TAKAMITSU TAMURA.** *Surface,* 2000, vol. 38 (10), 22-44